(19) **Europäisches Patentamt / European Patent Office / Office européen des brevets**

(11) **EP 3 867 603 B1**

(12) **FASCICULE DE BREVET EUROPEEN**

(45) Date de publication et mention de la délivrance du brevet:
**19.07.2023 Bulletin 2023/29**

(21) Numéro de dépôt: **19827776.6**

(22) Date de dépôt: **10.10.2019**

(51) Classification Internationale des Brevets (IPC):
***G01D 5/14*** *(2006.01)*

(52) Classification Coopérative des Brevets (CPC):
**G01D 5/145; H01F 13/003;** H01F 7/0294

(86) Numéro de dépôt international:
**PCT/FR2019/052397**

(87) Numéro de publication internationale:
**WO 2020/079350 (23.04.2020 Gazette 2020/17)**

(54) **MÉTHODE ET SYSTÈME CAPTEUR DE DÉTERMINATION D'UNE POSITION ANGULAIRE RELATIVE ENTRE DEUX PIÈCES, ET PROCÉDÉ DE FABRICATION D'UN CORPS MAGNÉTIQUE**

VERFAHREN UND SENSORSYSTEM ZUR BESTIMMUNG EINER RELATIVEN WINKELPOSITION ZWISCHEN ZWEI TEILEN UND VERFAHREN ZUR HERSTELLUNG EINES MAGNETISCHEN ELEMENTS

METHOD AND SENSOR SYSTEM FOR DETERMINING A RELATIVE ANGLULAR POSITION BETWEEN TWO PARTS, AND METHOD FOR PRODUCING A MAGNETIC ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2018 FR 1859543**

(43) Date de publication de la demande:
**25.08.2021 Bulletin 2021/34**

(73) Titulaire: **Electricfil Automotive**
**01700 Beynost (FR)**

(72) Inventeurs:
- **JERANCE, Nikola**
  **69004 LYON (FR)**
- **RAKOTOARISON, Harijaona Lalao**
  **01700 BEYNOST (FR)**

(74) Mandataire: **Cabinet Beau de Loménie**
**51 avenue Jean Jaurès**
**BP 7073**
**69301 Lyon Cedex 07 (FR)**

(56) Documents cités:
**US-A1- 2002 089 327     US-A1- 2007 090 827**
**US-A1- 2015 177 023**

**Description**

L'invention concerne une méthode de détermination d'une position angulaire relative d'une première pièce par rapport à une seconde pièce autour d'un axe de rotation, qui sera avantageusement mis en oeuvre à l'aide d'un système capteur de position magnétique. L'invention concerne aussi un procédé de réalisation d'un corps magnétique pour une telle méthode et pour un tel système capteur.

Les avantages techniques des systèmes capteurs magnétiques sont bien connus. Ils peuvent être produits à des coûts relativement bas, ils ne sont pas soumis à une usure mécanique significative, et ils sont quasiment insensibles à l'humidité et à la saleté (poussière, huile, etc.) non magnétique. Grâce à ces avantages, les systèmes capteurs magnétiques sont souvent utilisés dans les applications pour l'automobile.

Un système capteur magnétique de position angulaire comporte au moins un corps aimanté à aimantation permanente, et au moins une cellule de mesure de champ magnétique, le système capteur étant prévu pour mesurer la position relative de la cellule de mesure par rapport au corps aimanté, autour de l'axe de rotation.

Dans une application pratique, le mécanisme à surveiller comporte une première pièce et une seconde pièce qui sont mobiles en rotation l'une par rapport à l'autre. Le corps aimanté est rendu solidaire de la première pièce, ou intégrée à celle-ci, tandis que la ou les cellule(s) de mesure est rendue solidaire de la seconde pièce du mécanisme, et le système capteur permet de déterminer la position relative des deux pièces du mécanisme.

Dans certains cas, on souhaite pouvoir mesurer la position relative sur une course angulaire.

Typiquement, dans une application dans le domaine automobile, de tels systèmes capteurs sont utilisés pour déterminer la position angulaire d'un levier de commande d'une boite de vitesse automatique. Selon une autre application, de tels systèmes capteurs peuvent être utilisés pour déterminer la position angulaire d'un organe de sortie d'un actionneur, par exemple pour un actionneur de frein de parc. L'invention est destinée à la résolution des problèmes liés à la mise en oeuvre pratique des systèmes capteurs, qui sont souvent destinés à être intégrés dans un espace contraint, avec un volume disponible limité, et souvent en présence des pièces ferromagnétiques à proximité du système capteur, ce qui peut réduire la précision de la détermination de la position angulaire.

On connaît du document EP-2.212.652 une méthode dans laquelle un système de capteurs est mis en oeuvre en utilisant une combinaison de la composante radiale et de la composante tangentielle du champ magnétique crée par un corps aimanté. Dans cette méthode, une première pièce est équipée avec un corps aimanté, en forme de bague cylindrique de révolution autour de l'axe de rotation, et présentant une aimantation en tout point du corps aimanté, une aimantation dont le vecteur aimantation :

-   est parallèle à un plan d'aimantation fixe pour le corps aimanté, et
-   présente une direction continûment variable dans le plan d'aimantation en fonction de la position du point du corps aimanté selon une direction perpendiculaire à l'axe de rotation dans le plan d'aimantation.

Une seconde pièce est équipée avec :

-   une première cellule de mesure en un premier point de mesure, délivrant deux signaux électriques représentatifs respectivement d'une composante primaire et d'une composante secondaire du champ magnétique créé par le corps aimanté au point de mesure de la cellule considérée, dans un plan de mesure,
-   une deuxième cellule de mesure en un deuxième point de mesure, délivrant deux signaux électriques représentatifs respectivement d'une composante primaire et d'une composante secondaire du champ magnétique créé par le corps aimanté au point de mesure de la cellule considérée, dans le plan de mesure.

La méthode détermine une valeur représentative de la position angulaire relative entre les deux pièces en déterminant un angle dont la tangente est fonction d'une composition différentielle des dites composantes mesurées par les deux cellules pour une position angulaire relative donnée.

La réalisation de l'aimantation nécessaire au fonctionnement de cette méthode, sur un aimant courbé autour d'un axe principal, se révèle cependant complexe à mettre en oeuvre dans un contexte industriel.

Le document WO2007099238 décrit un capteur utilisant une aimantation qui présente une variation le long de la course. Cependant, dans le cas d'un capteur rotatif à aimant permanent rigide, cette aimantation nécessite une tête d'aimantation ayant une géométrie complexe et, souvent, difficilement réalisable.

D'autres solutions avec une direction d'aimantation variable sont présentées dans les documents DE102012111653, US6545463, EP0997706, pour la réalisation de capteurs linéaires. L'enseignement de ces documents n'est pas directement transposable à des capteurs de position angulaire car les aimantations proposées sont difficiles à réaliser et le champ magnétique dans le capteur pourrait être trop faible, notamment avec les aimants permanents bon marché, comme les ferrites.

US8022694 présente une aimantation et la tête d'aimantation pour créer cette aimantation. Cependant, cette solution ne permet pas d'optimiser l'angle d'aimantation obtenu dans le volume de l'aimant et, en plus, l'aimantation d'un aimant suffisamment puissant, dans l'épaisseur nécessaire pour cette application, nécessiterait un courant très important et donc un dispositif électronique coûteux, voire impossible à réaliser.

Le document EP2488830 de la demanderesse propose un corps aimanté pour un capteur de position angulaire qui présente une variation d'angle d'aimantation en fonction de la position en rotation, mais avec un plan d'aimantation qui est perpendiculaire à l'axe de rotation.

D'autres systèmes de capteurs sont décrits dans les documents US-2002/089327, US-2007/090827 et US-2015/177023.

L'invention vise à définir une méthode de détermination de la position angulaire relative entre deux pièces qui permette l'utilisation d'un système capteur plus simple à réaliser à l'échelle industrielle.

Dans ce but, l'invention propose une méthode de détermination d'une position angulaire relative d'une première pièce par rapport à une seconde pièce sur une course angulaire autour d'un axe de rotation, dans laquelle :

- la première pièce est équipée avec un corps aimanté, en forme de secteur angulaire courbé autour de l'axe de rotation, ledit secteur angulaire comportant une portion angulaire unique ou plusieurs portions angulaires successives autour de l'axe de rotation, le corps aimanté présentant, en tout point d'au moins une portion angulaire du corps aimanté, une aimantation dont le vecteur aimantation :

    ▪ est parallèle à un plan d'aimantation fixe pour ladite portion angulaire du corps aimanté, et
    ▪ présente une direction continûment variable dans le plan d'aimantation en fonction de la position du point du corps aimanté selon une direction perpendiculaire à l'axe de rotation dans le plan d'aimantation ;

- la seconde pièce est équipée avec au moins une première cellule de mesure en un premier point de mesure, délivrant deux signaux électriques représentatifs respectivement d'une composante primaire et d'une composante secondaire du champ magnétique créé par le corps aimanté au point de mesure de la cellule considérée, dans un plan de mesure,
- la méthode détermine une valeur représentative de la position angulaire relative entre les deux pièces en fonction des dites composantes mesurées par la cellule de mesure pour une position angulaire relative donnée.

La méthode est caractérisée en ce que le plan d'aimantation du corps aimanté est parallèle à l'axe de rotation.

Selon d'autres caractéristiques d'une méthode selon l'invention, prises individuellement ou en combinaison :

- Le corps aimanté peut comporter une portion angulaire unique, le corps aimanté présentant alors, en tout point du corps aimanté, une aimantation dont le vecteur aimantation :

    ▪ est parallèle à un plan d'aimantation fixe unique pour le corps aimanté, et
    ▪ présente une direction continûment variable dans le plan d'aimantation en fonction de la position du point du corps aimanté selon une direction perpendiculaire à l'axe de rotation (A) dans le plan d'aimantation.

- Le plan d'aimantation peut être perpendiculaire à un rayon issu de l'axe de rotation. Il peut être notamment perpendiculaire à un rayon issu de l'axe de rotation et compris dans l'étendue angulaire du corps aimanté autour de l'axe de rotation. Il peut être plus particulièrement perpendiculaire à un rayon issu de l'axe de rotation et orienté selon une bissectrice de l'étendue du corps aimanté ou de la course angulaire.
- Le corps aimanté peut comporter au moins une première portion angulaire et au moins une deuxième portion angulaire distinctes autour de l'axe de rotation, le corps aimanté présentant alors une aimantation dont le vecteur aimantation :

    ▪ en tout point de la première portion angulaire du corps aimanté, est parallèle à un premier plan d'aimantation fixe,
    ▪ en tout point de la deuxième portion angulaire du corps aimanté, est parallèle à un deuxième plan d'aimantation fixe, et
    ▪ présente une direction continûment variable dans le plan d'aimantation considéré en fonction de la position du point de la portion angulaire considérée du corps aimanté selon une direction perpendiculaire à l'axe de rotation dans le plan d'aimantation considéré.

- Pour chaque portion angulaire, le plan d'aimantation peut être perpendiculaire à un rayon issu de l'axe de rotation et compris dans l'étendue angulaire de la portion angulaire considérée.
- La seconde pièce peut être équipée avec une deuxième cellule de mesure en un deuxième point de mesure, délivrant deux signaux électriques représentatifs respectivement d'une composante primaire et d'une composante secondaire du champ magnétique créé par le corps aimanté au point de mesure de la cellule considérée, dans le plan de mesure, et la méthode peut alors déterminer une valeur représentative de la position angulaire relative entre les deux pièces en déterminant un angle brut dont la tangente est fonction d'une composition différentielle des dites composantes mesurées par les deux cellules pour une position angulaire relative donnée.

- La première et la deuxième cellule de mesure peuvent être agencées sur la seconde pièce de telle sorte que les axes de mesure primaires de la première et de la deuxième cellule de mesure sont parallèles entre eux, et que les axes de mesure secondaires de la première et de la deuxième cellule de mesure sont parallèles entre eux.

- La méthode peut déterminer une valeur représentative de la position angulaire relative entre les deux pièces en déterminant un angle brut dont la tangente est fonction d'un rapport entre d'une part la différence des composantes secondaires et d'autre part la différence des composantes primaires, mesurées par les deux cellules pour une position angulaire relative donnée.

- Le premier point de mesure de la première cellule de mesure et le deuxième point de mesure de la deuxième cellule peuvent être agencés à égale distance de l'axe de rotation et dans des positions écartées d'un angle fixe autour de l'axe de rotation non nul.

- Le premier point de mesure de la première cellule de mesure et le deuxième point de mesure de la deuxième cellule peuvent être agencés dans des positions écartées d'un angle fixe non nul et strictement inférieur à 90 degrés d'angle autour de l'axe de rotation, de préférence inférieur à 30 degrés d'angle, plus préférentiellement inférieur ou égal à 20 degrés d'angle autour de l'axe de rotation.

- La première et la deuxième cellule de mesure peuvent être agencées sur la seconde pièce de telle sorte que les axes de mesure primaires de la première et de la deuxième cellule de mesure, ou les axes de mesure secondaires de la première et de la deuxième cellule de mesure, sont orientés selon la direction d'une bissectrice de l'écart angulaire entre les deux points de mesure, mesuré autour de l'axe de rotation dans un plan perpendiculaire à l'axe de rotation.

- Le premier point de mesure de la première cellule de mesure et, le cas échéant, le deuxième point de mesure de la deuxième cellule peuvent être agencés à une distance de l'axe de rotation qui est inférieure au rayon d'une surface cylindrique externe du corps aimanté, en étant décalé(s) du corps aimanté selon la direction de l'axe de rotation.

- Le corps aimanté peut présenter la forme d'un tronçon d'un secteur tubulaire cylindrique de révolution autour de l'axe principal.

- Le corps aimanté peut présenter la forme d'un tronçon d'un secteur angulaire de disque cylindrique de révolution autour de l'axe de rotation principal.

- Le corps aimanté peut présenter la forme d'un secteur angulaire à 180 degrés d'angle ou moins autour de l'axe de rotation.

- Le plan de mesure de la ou des cellules de mesure peuvent être parallèles à l'axe de rotation.

L'invention concerne par ailleurs un système de capteur pour la détermination d'une position angulaire relative d'une première pièce par rapport à une seconde pièce sur une course angulaire autour d'un axe de rotation, le système comprenant :

- un corps aimanté en forme de secteur angulaire courbé autour d'un axe principal parallèle à l'axe de rotation, ledit secteur angulaire comportant une portion angulaire unique ou plusieurs portions angulaires successives autour de l'axe principal, et le corps aimanté présentant une aimantation ayant, en tout point d'au moins une portion angulaire du corps aimanté, une aimantation dont le vecteur aimantation

  ▪ est parallèle à un plan d'aimantation fixe pour ladite portion angulaire du corps aimanté, et
  ▪ présente une direction continûment variable dans le plan d'aimantation en fonction de la position du point du corps aimanté selon une direction perpendiculaire à l'axe de rotation dans le plan d'aimantation ;

- une première cellule de mesure en un premier point de mesure, délivrant deux signaux électriques représentatifs respectivement d'une composante primaire et d'une composante secondaire du champ magnétique créé par le corps aimanté au point de mesure de la cellule considérée, dans un plan de mesure,

- une deuxième cellule de mesure en un deuxième point de mesure, délivrant deux signaux électriques représentatifs respectivement d'une composante primaire et d'une composante secondaire du champ magnétique créé par le corps aimanté au point de mesure de la cellule considérée, dans le plan de mesure.

Le système de capteur est caractérisé en ce que le plan d'aimantation du corps aimanté est parallèle à l'axe de rotation.

Selon d'autres caractéristiques d'un système selon l'invention, prises individuellement ou en combinaison :

- Le corps aimanté peut comporter une portion angulaire unique, le corps aimanté présentant, en tout point du corps aimanté, une aimantation dont le vecteur aimantation :

    ▪ est parallèle à un plan d'aimantation fixe unique pour le corps aimanté, et
    ▪ présente une direction continûment variable dans le plan d'aimantation en fonction de la position du point du corps aimanté selon une direction perpendiculaire à l'axe principal dans le plan d'aimantation.

- Le plan d'aimantation peut être perpendiculaire à un rayon issu de l'axe de principal. Il peut être notamment perpendiculaire à un rayon issu de l'axe de rotation et compris dans l'étendue angulaire du corps aimanté autour de l'axe de rotation. Il peut être plus particulièrement perpendiculaire à un rayon issu de l'axe de rotation et orienté selon une bissectrice de l'étendue angulaire du corps aimanté ou de la course angulaire.
- Le corps aimanté peut comporter au moins une première portion angulaire et au moins une deuxième portion angulaire distinctes autour de l'axe de principal, le corps aimanté présentant alors une aimantation dont le vecteur aimantation ;

    ▪ est parallèle à un premier plan d'aimantation fixe, en tout point de la première portion angulaire du corps aimanté,
    ▪ est parallèle à un deuxième plan d'aimantation fixe, en tout point de la deuxième portion angulaire du corps aimanté, et
    ▪ présente une direction continûment variable dans le plan d'aimantation considéré en fonction de la position du point de la portion angulaire considérée du corps aimanté selon une direction perpendiculaire à l'axe de principal (A') dans le plan d'aimantation considéré.

- Pour chaque portion angulaire, le plan d'aimantation peut être perpendiculaire à un rayon issu de l'axe principal et compris dans l'étendue angulaire de la portion angulaire considérée
- Le système peut comporter une deuxième cellule de mesure en un deuxième point de mesure, délivrant deux signaux électriques représentatifs respectivement d'une composante primaire et d'une composante secondaire du champ magnétique créé par le corps aimanté au point de mesure de la cellule considérée, dans le plan de mesure, et le système de capteur peut déterminer une valeur représentative de la position angulaire relative entre les deux pièces en déterminant un angle brut dont la tangente est fonction d'une composition différentielle des dites composantes mesurées par les deux cellules pour une position angulaire relative donnée.
- La première et la deuxième cellule de mesure peuvent être agencées de telle sorte que les axes de mesure primaires de la première et de la deuxième cellule de mesure sont parallèles entre eux, et que les axes de mesure secondaires de la première et de la deuxième cellule de mesure sont parallèles entre eux.
- Le système peut comporter une unité de calcul programmée pour déterminer une valeur représentative de la position angulaire relative entre les deux pièces en déterminant un angle brut dont la tangente est fonction d'un rapport entre d'une part la différence des composantes secondaires et d'autre part la différence des composantes primaires, mesurées par les deux cellules pour une position angulaire relative donnée.
- Le premier point de mesure de la première cellule de mesure et le deuxième point de mesure de la deuxième cellule peuvent être agencés à égale distance de l'axe de rotation et dans des positions écartées d'un angle fixe non nul.
- Le premier point de mesure de la première cellule de mesure et le deuxième point de mesure de la deuxième cellule peuvent être agencés dans des positions écartées d'un angle fixe non nul et strictement inférieur à 90 degrés d'angle autour de l'axe de rotation, de préférence inférieur à 30 degrés d'angle, plus préférentiellement inférieur ou égal à 20 degrés d'angle autour de l'axe de rotation.
- Le premier point de mesure de la première cellule de mesure et, le cas échéant, le deuxième point de mesure de la deuxième cellule peuvent être agencés à une distance de l'axe de rotation qui est inférieure au rayon d'une surface cylindrique externe enveloppe du corps aimanté, en étant décalé(s) du corps aimanté selon la direction de l'axe de rotation (A).
- La première et la deuxième cellule de mesure peuvent être agencées de telle sorte que les axes de mesure primaires de la première et de la deuxième cellule de mesure, ou les axes de mesure secondaires de la première et de la deuxième cellule de mesure, sont orientés selon la direction d'une bissectrice de l'écart angulaire entre les deux points de mesure, mesuré autour de l'axe de rotation dans un plan perpendiculaire à l'axe de rotation.
- Le corps aimanté peut présenter la forme d'un tronçon d'un secteur tubulaire cylindrique de révolution autour de l'axe de rotation, ou d'un tronçon d'un secteur angulaire de disque cylindrique de révolution autour de l'axe de rotation.
- le corps aimanté peut présenter la forme d'un secteur angulaire dont l'étendue angulaire est supérieure à 60 degrés d'angle, de préférence supérieure 80 degrés d'angle, voire égale à 360 degrés d'angle, autour de l'axe de rotation.

- Le corps aimanté peut présenter la forme d'un secteur angulaire cylindrique de révolution autour de l'axe principal.
- L'axe principal peut coïncider avec l'axe de rotation.
- Le plan de mesure de la ou des cellules de mesure peuvent être parallèles à l'axe de rotation.

L'invention concerne encore un procédé de fabrication d'un corps aimanté pour un système de détermination d'une position angulaire relative d'une première pièce par rapport à une seconde pièce autour d'un axe de rotation, le procédé comprenant la fourniture d'un corps de matériau magnétisable ayant une forme de secteur angulaire courbé et ayant une étendue angulaire autour d'un axe principal, et ledit secteur angulaire comportant une portion angulaire unique ou plusieurs portions angulaires successives autour de l'axe principal.

Le procédé est caractérisé par ce qu'il comporte, pour au moins une première portion angulaire du corps aimanté :

- la disposition, à proximité de la première portion angulaire du corps de matériau magnétisable, d'un premier réseau de conducteurs électriques parallèles comprenant plusieurs faisceaux de conducteurs électriques parallèles, ayant une orientation perpendiculaire à l'axe principal et parallèle à un premier rayon directeur issu de l'axe principal et compris dans l'étendue angulaire de la première portion angulaire considérée du corps aimanté, les faisceaux étant décalés latéralement l'un de l'autre selon une direction de décalage perpendiculaire à leur orientation et perpendiculaire à l'axe principal ;
- la circulation d'un courant électrique dans les faisceaux de conducteurs électriques, le sens de circulation du courant, défini dans un repère fixe par rapport au corps aimanté, étant identique dans tous les conducteurs d'un même faisceau, et étant inverse dans deux faisceaux adjacents, formant ainsi un ou plusieurs faisceaux aller dans lesquels le courant circule selon un premier sens, et un ou plusieurs faisceaux retour dans lesquels le courant circule selon un second sens, inverse du premier, le courant circulant dans les faisceaux étant apte à générer, autour du réseau et dans le corps de matériau magnétisable, un champ magnétique d'aimantation propre à aimanter le corps de matériau magnétisable.

Selon d'autres caractéristiques d'un procédé selon l'invention, prises individuellement ou en combinaison :

- Le premier réseau de conducteurs électriques parallèles peut s'étendre en regard de la première portion du corps de matériau magnétisable qui est une portion unique couvrant l'étendue angulaire du corps de matériau magnétisable.
- Le premier rayon directeur peut être orienté selon une bissectrice de l'étendue angulaire du corps de matériau magnétisable.
- Le premier réseau de conducteurs électriques parallèles peut s'étendre en regard d'une première portion du corps de matériau magnétisable, et un deuxième réseau de conducteurs électriques parallèles peut s'étendre en regard d'une seconde portion du corps de matériau magnétisable, distincte de la première portion, les faisceaux de conducteurs électriques parallèles du second réseau étant orientés selon une deuxième orientation perpendiculaire à l'axe principal et parallèle à un deuxième rayon directeur issu de l'axe principal et compris dans l'étendue angulaire de la deuxième portion angulaire considérée.
- Les conducteurs électriques des faisceaux peuvent être formés par des tronçons d'au moins un bobinage d'un fil conducteur le long duquel se succèdent, répétitivement, au moins un conducteur d'un faisceau aller, un tronçon de liaison, et un conducteur d'un faisceau retour, un autre tronçon de liaison et un autre un conducteur d'un faisceau aller.

Diverses autres caractéristiques ressortent de la description faite ci-dessous en référence aux dessins annexés qui montrent, à titre d'exemples non limitatifs, des formes de réalisation de l'objet de l'invention :

- La **Figure 1A** est une vue schématique en perspective illustrant un mode de réalisation d'un système capteur permettant de mettre en oeuvre l'invention et comportant une seule cellule de mesure ;
- La **Figure 1B** est une vue similaire à celle de la **Fig. 1A** illustrant un mode de réalisation d'un système capteur permettant de mettre en oeuvre l'invention et comportant deux cellules de mesure ;
- La **Figure 2A** est une vue schématique de dessus, selon la direction de l'axe de rotation, dans un plan perpendiculaire à l'axe de rotation, du système de la **Fig. 1B,** dans une position dite de référence du corps aimanté par rapport aux cellules de mesure ;
- La **Figure 2B** est une vue similaire à celle de la de la **Fig. 2A,** pour une position quelconque du corps aimanté par rapport aux cellules de mesure ;
- La **Figure 3** est une vue schématique de face, selon la direction d'un rayon perpendiculaire à l'axe de rotation, du système de la **Fig. 1B;**
- La **Figure 4** est une vue schématique, en coupe selon un plan contenant l'axe de rotation, du système de la **Fig. 1B;** ;

- La **Figure 5** est une vue analogue à celle de la **Fig. 3,**, schématique de face, selon la direction d'un rayon perpendiculaire à l'axe de rotation, du système de la **Fig. 1B,**, montrant plus particulièrement l'aimantation du corps aimanté ;
- La **Figure 5A** est un agrandissement d'une portion de la **Fig. 5** ;
- La **Figure 6** est une vue similaire à celle de la **Fig. 2A,** vue schématique de dessus, selon la direction de l'axe de rotation illustrant un procédé d'aimantation pour réaliser un corps aimanté d'un système capteur permettant de mettre en oeuvre l'invention ;
- La **Figure 7** est une vue schématique de face, selon la direction d'un rayon perpendiculaire à l'axe de rotation, illustrant un procédé d'aimantation pour réaliser un corps aimanté d'un système capteur permettant de mettre en oeuvre l'invention ;
- La **Figure 8** illustre des étapes d'une méthode selon l'invention ;
- La **Figure 9** illustre une variante de réalisation d'un corps aimanté ;
- Les **Figures 10** et **11** sont des vues similaires à celles de la **Fig. 7,** illustrant des variantes de réalisation d'une tête d'aimantation pour réaliser un corps aimanté d'un système capteur permettant de mettre en oeuvre l'invention ;
- Les **Figures 12A** et **12B** illustrent des résultats obtenus par simulation montrant, pour une configuration à une cellule de mesure, respectivement d'une part les composantes By et BZ du champ magnétique, et d'autre part un angle brut, ou angle magnétique, qui peut être déduit de ces composantes, en fonction de la position angulaire des deux pièces ;
- Les **Figures 13A** et **13B** illustrent des résultats obtenus par simulation montrant, pour une configuration à deux cellules de mesure, respectivement d'une part une valeur représentative de la différence des premières composantes, et d'autre part une valeur représentative de la différence des secondes composantes du champ en chacun des deux points de mesure, et d'autre part un angle brut, ou angle magnétique, qui peut être déduit de ces composantes, en fonction de la position angulaire des deux pièces ; et
- La **Figure 14** illustre une variante de réalisation de l'invention pour obtenir un corps aimanté comportant une première portion angulaire et une deuxième portion angulaire distinctes, ayant chacune leur propre plan d'aimantation.

On a illustré sur les figures des modes de réalisation d'un système capteur **1** de position magnétique permettant la mise en oeuvre d'une méthode de détermination de la position angulaire relative selon l'invention.

Dans ces premiers modes de réalisation, le système capteur **1** est conçu pour déterminer la position relative de deux pièces **14, 16** qui sont susceptibles de se déplacer relativement l'une à l'autre d'une part selon un mouvement de rotation d'axe **A.** Dans les exemples, il n'y a pas d'autre axe de déplacement relatif. On considère que les deux pièces **14, 16** n'ont pas de mouvement relatif selon les directions radiales par rapport à l'axe de rotation **A.** Le système capteur **1** peut ainsi par exemple être utilisé pour détecter la position levier de commande de boite de vitesse automatique, le système de capteur étant par exemple agencé au niveau d'un arbre d'articulation du levier.

Le système capteur **1** comporte d'une part un corps aimanté **10** à aimantation $\vec{M}$ permanente, et au moins une cellule de mesure de champ magnétique **11, 12.** Dans certains modes de réalisation, on prévoira deux cellules de mesure **11, 12.** Dans une application pratique, le corps aimanté **10** est destiné à être fixé à une première pièce **14** d'un mécanisme, par exemple un arbre rotatif d'articulation d'un levier, une colonne de direction ou un arbre de sortie d'un actionneur, qui est mobile par rapport à une seconde pièce **16** du mécanisme, par exemple une pièce fixe de la structure du véhicule ou d'une pièce de support du système capteur **1.**

Le capteur **1** est prévu pour déterminer la position angulaire relative du corps aimanté **10** par rapport à la cellule de mesure, ou par rapport aux cellules de mesure **11, 12,** autour de l'axe de rotation **A.** Le mouvement relatif entre le corps aimanté **10** et la ou les cellules de mesure **11, 12,** qui est une simple rotation dans l'exemple considéré, peut donc être décrit dans un repère orthogonal **(O, $\overrightarrow{Xo}$, $\overrightarrow{Yo}$, $\overrightarrow{Zo}$)**, les vecteurs de base $\overrightarrow{Xo}$ et $\overrightarrow{Yo}$ étant contenus dans un plan perpendiculaire à l'axe de rotation **A,** le point d'origine **0** étant un point de l'axe de rotation **A,** et les directions des vecteurs de base $\overrightarrow{Xo}$ et $\overrightarrow{Yo}$ étant arbitraires mais orthogonales entre elles. Il en résulte que le vecteur de base $\overrightarrow{Zo}$ est parallèle à l'axe de rotation **A.** Dans ce repère, on peut par exemple considérer que les directions des vecteurs de base $\overrightarrow{Xo}$ et $\overrightarrow{Yo}$ sont liées à la seconde pièce **16** qui porte la ou les cellules de mesure **11, 12.** Dans l'exemple illustré, le vecteur de base radial $\overrightarrow{Xo}$ est orienté de telle sorte qu'un rayon issu de l'axe de rotation **A** et orienté selon ce vecteur de base radial $\overrightarrow{Xo}$ passe par le point de mesure de la cellule, arbitrairement par celui de la première cellule de mesure **11** dans un système à deux cellules. Dans ce repère, la première pièce **14** est mobile et la seconde pièce **16** est fixe, mais cela est arbitraire dans la mesure où l'on considère uniquement un mouvement relatif entre les deux pièces **14, 16.**

Le corps aimanté **10** possède une géométrie en forme de secteur angulaire courbe autour d'un axe principal **A',** qui dans le système capteur est, de préférence parallèle à l'axe de rotation **A.** De préférence, l'axe principal **A'** est confondu avec l'axe de rotation **A.**

Dans l'exemple illustré, le corps aimanté **10** possède une géométrie en forme de secteur angulaire cylindrique autour de l'axe principal **A',** c'est-à-dire un volume formé par une génératrice droite, parallèle à l'axe principal **A',** suivant une courbe fermée, dans un secteur angulaire autour de l'axe principal **A'.** Plus précisément, on peut prévoir, ce qui est cas dans les exemples illustrés, que le corps aimanté **10** possède une géométrie en forme de secteur angulaire cylindrique de révolution autour de l'axe principal **A'**. Dans certains exemples, le corps aimanté **10** présente plus précisément la forme d'un tronçon d'un secteur tubulaire cylindrique de révolution autour de l'axe de principal **A'**. Il pourrait aussi présenter la forme d'un tronçon d'un secteur angulaire de disque cylindrique de révolution autour de l'axe de rotation principal **A'**, donc en forme de « portion de camembert ».

Dans les exemples illustrés, le corps aimanté **10** possède une étendue inférieure à 360 degrés d'angle autour de l'axe principal **A'**. Il présente alors une géométrie en « secteur annulaire » présentant la forme d'un tronçon d'un secteur d'un tube cylindrique de révolution autour de l'axe principal **A'**, délimité angulairement autour de l'axe de principal **A'** par deux faces latérales **9** parallèles à l'axe principal **A'**. L'étendue angulaire du corps aimanté **10** est de préférence supérieure à la course angulaire relative le long de laquelle on veut pouvoir déterminer la position des deux pièces **14, 16**. Cependant, dans certains cas, on pourra avoir un corps aimanté ayant une étendue angulaire égale ou inférieure à la course angulaire relative. Dans certains exemples illustrés, le corps aimanté **10** présente la forme d'un tronçon d'un tube cylindrique de révolution autour de l'axe de principal **A'** ayant une étendue angulaire comprise dans la gamme allant de 70 à 100 degrés d'angle. Toutefois, le secteur angulaire pourrait présenter une étendue une étendue angulaire comprise dans la gamme allant de 20 à 120 degrés d'angle, voire une étendue angulaire supérieure à 120 degrés d'angle, allant jusqu'à être proche ou égale à 180 degrés d'angle autour de l'axe principal **A'**.

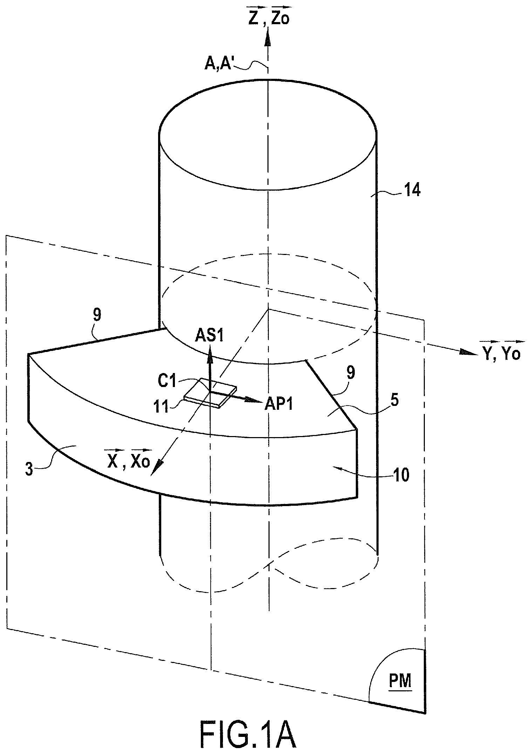

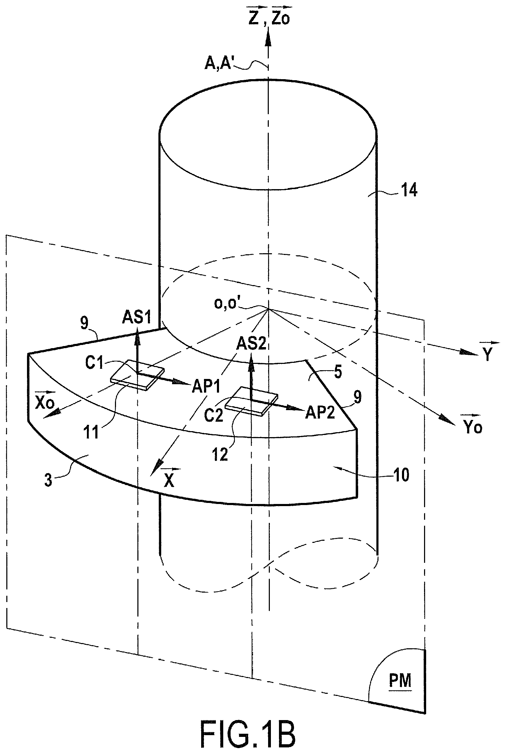

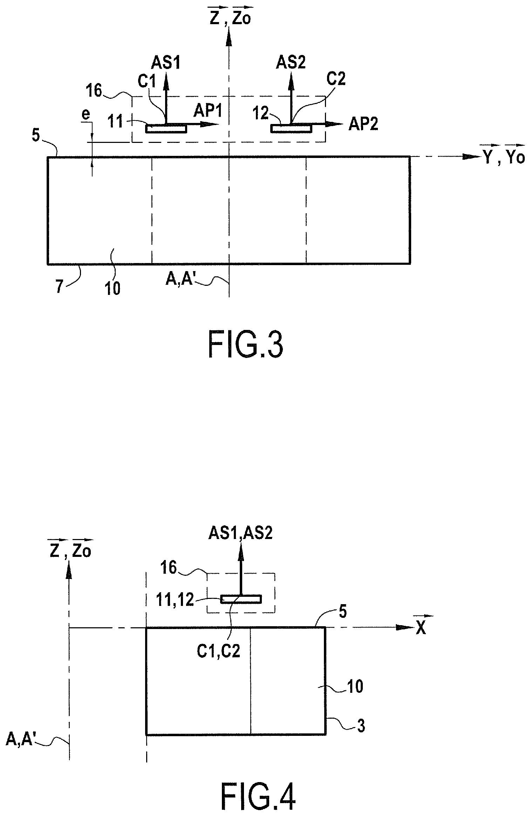

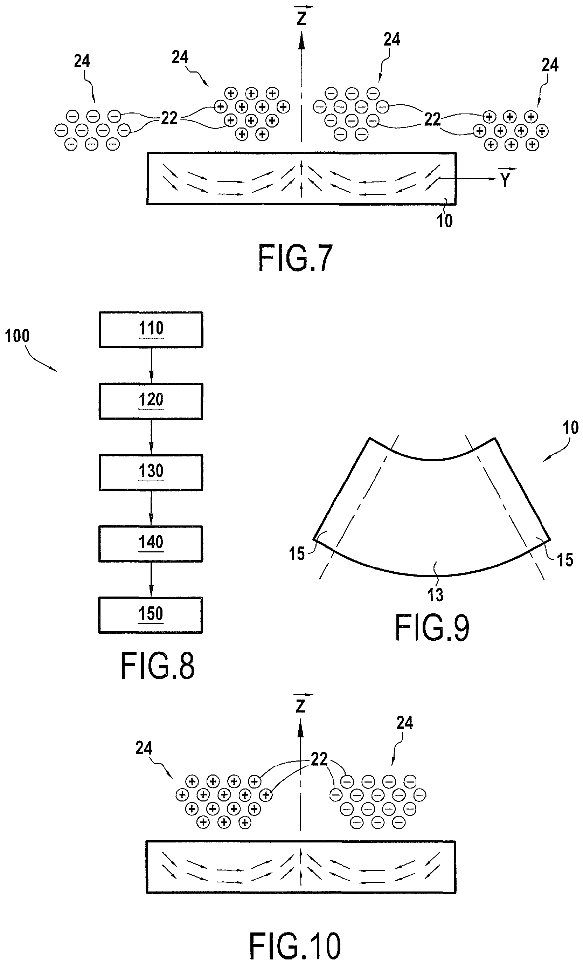

A la **Fig. 9**, on a illustré un autre exemple possible pour la géométrie du corps aimanté **10**. Dans ce cas, en vue de dessus, le corps aimanté possède une portion centrale **13** ayant la même géométrie que le corps aimanté des **Figs. 1** à **4**, à savoir une géométrie cylindrique de révolution autour de l'axe principal **A'**. Toutefois, dans cette variante, cette portion centrale **13** est prolongée à chaque extrémité de son étendue angulaire par des tronçons d'extrémité rectilignes **15** qui la prolongent de part et d'autres en s'étendant, autour de l'axe principal **A'**, tangentiellement dans le prolongement de la portion centrale **13,** depuis les extrémités angulaires de la portion centrale **13.** Ces tronçons d'extrémité rectilignes présentent, dans l'exemple, la même section que la portion centrale. Les bords des tronçons d'extrémité rectilignes **15** sont, dans cet exemple, chanfreinés avec un chanfrein en quart de cercle. Au total, ce corps aimanté **10** est aussi en forme de secteur angulaire courbé autour de son axe principal **A'**.

Dans les exemples illustrés, le corps aimanté **10** est constitué d'une seule pièce s'étendant sur l'intégralité de l'étendue angulaire. Cependant, on pourrait prévoir qu'il soit constitué de plusieurs éléments de corps aimantés disposés côte à côte le long de l'étendue angulaire.

Dans l'exemple de la **Fig. 1A** ou de la **Fig. 1B,** le corps aimanté **10** est agencé sur un arbre **14,** à distance des extrémités longitudinales de l'arbre, avec donc des tronçons de l'arbre **14** de chaque côté du corps aimanté **10**. Cependant, on peut très bien prévoir une configuration dans laquelle le corps aimanté est agencé en bout d'arbre, au niveau d'une extrémité longitudinale de celui-ci. Dans ce cas, le corps aimanté peut présenter la géométrie d'un disque ou d'un secteur angulaire de disque.

Bien entendu, le corps aimanté **10** présente une épaisseur selon une direction radiale par rapport à l'axe de rotation **A.** Dans certaines applications, cette épaisseur peut être comprise dans la gamme allant de 2 à 20 millimètres, voire comprise dans la gamme allant de 3 à 15 millimètres, voire comprise dans la gamme allant de 5 à 12 millimètres.

Le corps aimanté **10** présente une surface enveloppe avant **3** qui est, dans les exemples illustrés aux **Figs. 1** à **1B,** la surface cylindrique de révolution externe du corps aimanté. Typiquement, notamment pour une application de mesure de la position angulaire d'un levier de vitesse, le corps aimanté peut présenter un rayon externe, correspondant au rayon de la surface enveloppe avant **3,** qui peut être compris dans la gamme allant de 10 millimètres à 45 millimètres. Pour d'autres applications, un diamètre supérieur ou inférieur peut être mis en oeuvre.

Le corps aimanté **10** est délimité axialement par deux faces terminales **5,** 7. De préférence, au moins une de ces faces terminales, ici par exemple la surface plane qui sera qualifiée arbitrairement de face supérieure **5,** est une surface plane s'étendant selon un plan perpendiculaire à l'axe principal **A',** donc, dans le système capteur **1,** perpendiculaire à l'axe de rotation **A.** Dans l'exemple illustré, les deux faces terminales opposées du corps aimanté **10,** supérieure **5** et inférieure **7,** sont des surfaces planes contenues chacune dans un plan perpendiculaire à l'axe principal **A'**.

La dimension axiale du corps aimanté **10,** entre ses deux faces terminales **5,** 7 est par exemple comprise dans la gamme allant de 2 millimètres à 12 millimètres.

Dans la méthode, le corps aimanté **10** est de préférence agencé pour que son axe principal **A'** coïncide avec l'axe de rotation **A** du mouvement relatif entres la première pièce **14** et la deuxième pièce **16.** Cependant, un décalage radial entre les deux axes est possible, qu'il soit volontaire ou qu'il résulte d'imprécisions de montage, par exemple dues aux tolérances géométriques des pièces constitutives du mécanisme ou de leur assemblage.

Lors d'un déplacement relatif entre la ou les cellules de mesure **11, 12** d'une part et le corps aimanté **10** d'autre part, la ou les cellules de mesure **11, 12** se déplacent relativement en regard d'une des surfaces terminales **5, 7** du corps aimanté **10**. Dans l'exemple, il s'agit de la face supérieure **5**. Dans l'exemple, lors du déplacement relatif entre le corps aimanté **10** et les cellules de mesure **11, 12,** il est conservé une distance d'entrefer « **e** » constante entre les cellules de mesure **11, 12** et la face terminale **5** du corps aimanté **10** selon la direction axiale de l'axe de rotation **A.** Cependant, il n'est pas exclu que la distance d'entrefer soit variable sur au moins une partie de l'étendue du champ opérationnel.

La détermination de position angulaire relative réalisée à l'aide du système capteur **1** est réalisée pour toute position angulaire relative, entre la ou les cellules de mesure **11, 12** et le corps aimanté **10,** variant entre deux positions angulaires relatives extrêmes distinctes autour de l'axe de rotation **A,** dont l'écart angulaire autour de l'axe de rotation **A** détermine la course angulaire relative.

Dans les exemples des **Figs 1A** à **13B,** on considère un corps aimanté en forme de secteur angulaire comportant une portion angulaire unique, couvrant toute l'étendue angulaire du corps aimanté **(10)** autour de l'axe principal **(A'),** ayant le même plan d'aimantation sur toute cette étendue angulaire du corps aimanté **(10).**

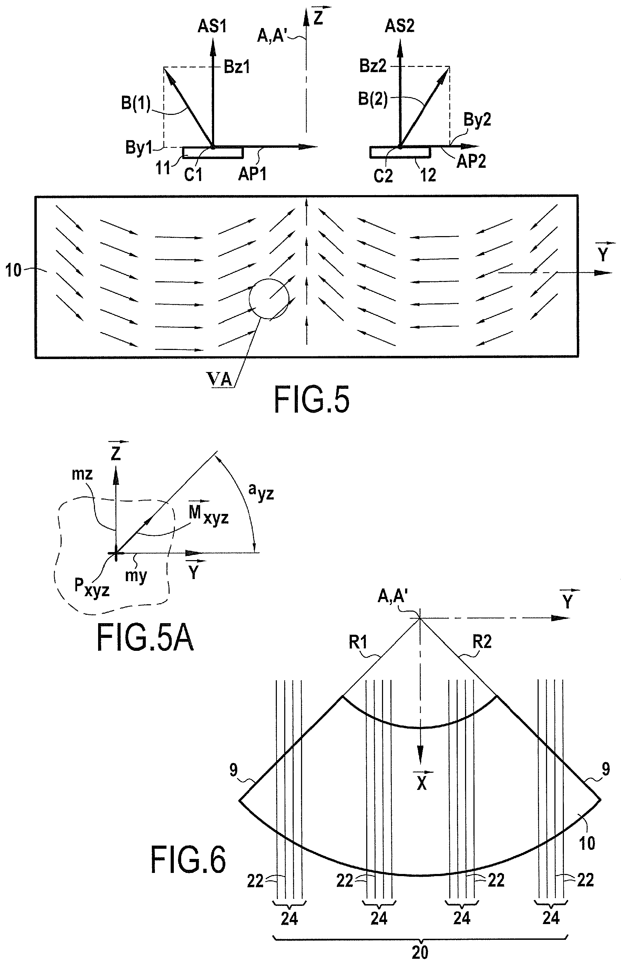

Dans un tel cas, comme on l'a illustré plus particulièrement à la **Fig. 5,** en tout point magnétisé du corps aimanté **10,** le vecteur d'aimantation $\vec{M}(P)$ du matériau constitutif du corps aimanté **10** :

- est parallèle à un plan d'aimantation **PM** fixe pour le corps aimanté, ce plan d'aimantation **PM** étant parallèle à l'axe principal **A'** du corps aimanté, donc, dans le système capteur **1,** parallèle à l'axe de rotation **A,** et
- présente une direction continûment variable dans le plan d'aimantation **PM,** en fonction de la position du point **P** considéré du corps aimanté selon une direction Y perpendiculaire à l'axe principal dans le plan d'aimantation **PM.**

Le plan d'aimantation **PM** est un plan fixe par rapport au corps aimanté. Dans les exemples illustrés aux **Figs. 1A** à **13B,** le plan d'aimantation **PM** est perpendiculaire à une bissectrice de l'étendue angulaire de l'aimant. De manière plus générale, le plan d'aimantation **PM** peut être perpendiculaire à un rayon issu de l'axe principal **A'** du secteur angulaire du corps aimanté **10,** ce rayon étant compris dans l'étendue angulaire du corps aimanté autour de l'axe principal **A'.** Ce rayon issu de l'axe principal **A',** auquel le plan d'aimantation **PM** peut être perpendiculaire, peut être compris dans une plage restreinte autour de l'orientation de la bissectrice de l'étendue angulaire de l'aimant. La plage restreinte est par exemple une plage de 15 degrés d'angle, centrée sur l'orientation de la bissectrice de l'étendue angulaire de l'aimant.

Dans l'application à un système capteur, on peut prévoir que le plan d'aimantation est, de préférence, perpendiculaire à un rayon issu de l'axe de rotation **A** et orienté selon une bissectrice de l'étendue angulaire du corps aimanté. De manière plus générale, le plan d'aimantation **PM** peut être perpendiculaire à un rayon issu de l'axe de rotation, ce rayon étant compris dans l'étendue angulaire du corps aimanté autour de l'axe de rotation.

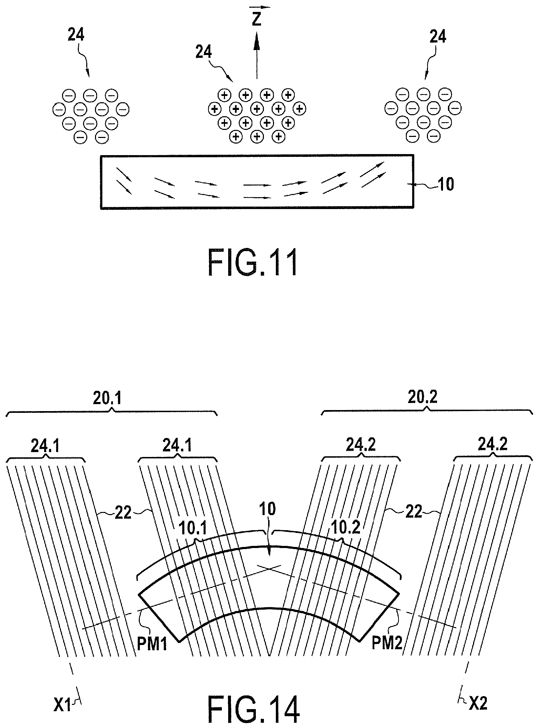

Dans l'exemple de la **Fig. 14,** on considère un corps aimanté en forme de secteur angulaire comportant au moins une première portion angulaire **10.1** et au moins une deuxième portion angulaire **10.2** distinctes autour de l'axe principal **A',** ayant chacune leur propre plan d'aimantation **PM1, PM2.**

Dans un tel cas, le corps aimanté présente une aimantation dont le vecteur aimantation :

∘ est parallèle à un premier plan d'aimantation **PM1** fixe, en tout point de la première portion angulaire **10.1** du corps aimanté **10 ;**
∘ est parallèle à un deuxième plan d'aimantation **PM2** fixe, en tout point de la deuxième portion angulaire du corps aimanté, et
∘ présente une direction continûment variable dans le plan d'aimantation considéré en fonction de la position du point de la portion angulaire considérée du corps aimanté selon une direction perpendiculaire à l'axe de principal **A'** dans le plan d'aimantation considéré.

Dans un tel cas, on considère alors que différentes portions angulaires du corps aimantation correspondent chacune à un plan d'aimantation associé.

On peut prévoir que, pour chaque portion angulaire, le plan d'aimantation **PM** soit perpendiculaire à un rayon issu de l'axe principal **A'** et compris dans l'étendue angulaire de la portion angulaire considérée.

En stipulant que le vecteur aimantation est parallèle à un plan d'aimantation fixe, il est entendu que, en chaque point du corps aimanté ou de la portion annulaire associée du corps aimanté, le vecteur aimantation est parallèle à ce plan. Le plan d'aimantation est donc un plan théorique qui indique l'orientation de ce vecteur pour tous les points du corps aimanté ou de la portion annulaire associée du corps aimanté. La notion de parallélisme doit s'interpréter au regard de la technique habituelle dans le domaine des champs magnétiques et notamment de l'aimantation des corps aimanté. D'une part, il est connu que l'aimantation est soumise à des effets de bords qui peuvent modifier localement l'aimantation à proximité des surfaces externes du corps aimanté. En ces points, il peut ne pas y avoir de strict parallélisme du vecteur aimantation avec le plan d'aimantation qui est un plan théorique. De même, il est connu que des défauts d'homogénéité du matériau magnétique peuvent localement affecter l'aimantation. Le plan d'aimantation doit donc s'entendre comme représentatif de l'aimantation en chaque point du corps aimanté ou de la portion annulaire associée du corps aimanté, pris ou prise dans sa globalité, en prenant en compte majoritairement les points qui ne sont pas affectés par les effets de bords ou les défauts d'homogénéité manifestement non recherchés, donc notamment les points au coeur du corps aimanté ou de la portion annulaire associée du corps aimanté.

Dans les exemples illustrés, on a illustré le cas où le ou les plans d'aimantation sont strictement parallèles à l'axe de rotation **A** et / ou l'axe principal **A'**. On conçoit que la notion de strict de parallélisme ou parallélisme du plan d'aimantation par rapport à l'axe de rotation **A** et / ou l'axe principal **A'** doit s'apprécier là aussi au regard de la technique habituelle dans le domaine des champs magnétiques et notamment de l'aimantation des corps aimanté. Elle doit aussi s'apprécier par rapport à l'art antérieur, où le plan d'aimantation est perpendiculaire à l'axe de rotation **A** et / ou l'axe principal **A'**. Elle doit encore s'apprécier au regard des avantages et bénéfices de l'invention, qui sont notamment la simplicité de réalisation du corps aimanté et, comme on verra plus loin, la compacité, selon la direction radiale par rapport à l'axe de rotation **A** et / ou l'axe principal **A'**, du système capteur qui peut être réalisé avec un tel corps aimanté.

Aussi, au sens de la présente invention, on considérera que le ou les plans d'aimantation sont strictement parallèles à l'axe de rotation **A** et / ou l'axe principal **A'** s'ils forment avec l'axe considéré un axe inférieur à 5 degrés. On considérera que le ou les plans d'aimantation sont parallèles à l'axe de rotation **A** et / ou l'axe principal **A'**, s'ils forment avec l'axe considéré un angle d'inclinaison inférieur à 30 degré, de préférence inférieur à 20 degrés. Dans ces conditions, on considérera que le plan d'aimantation du ou des corps aimantés **PM, PM1, PM2** sont parallèles à l'axe de rotation **A** et/ou l'axe principal **A'**.

Pour la description à suivre on peut définir un repère orthogonal **(O', $\vec{X}$, $\vec{Y}$, $\vec{Z}$)** dont :

- le point d'origine **0'** est un point de l'axe principal **A'**, de préférence le centre du corps aimanté **10** selon la direction de l'axe principal **A'**,
- les directions des vecteurs de base $\vec{X}$ et $\vec{Y}$ sont arbitraires mais orthogonales entre elles et contenues dans un plan perpendiculaires à l'axe principal **A'**, donc perpendiculaire à l'axe de rotation **A**,
- le vecteur de base $\vec{Zo}$ est parallèle à l'axe principal **A'**, donc peut être confondu avec que le vecteur de base $\vec{Z}$ du repère lié à la deuxième pièce **16**.

Ce repère est lié au corps aimanté **10**, donc les directions des vecteurs de base $\vec{X}$ et $\vec{Y}$ sont liées au corps aimanté **10**. Dans l'exemple à suivre, le centre **O'** du repère lié au corps aimanté peut être confondu avec le centre **O** du repère lié à la seconde pièce **16**.

Par commodité, on décrit plus particulièrement la situation pour les cas où le corps aimanté comporte un plan d'aimantation unique pour toute son étendue angulaire, et où ce plan d'aimantation est perpendiculaire à la bissectrice de l'étendue angulaire du corps aimanté **10** autour de l'axe principal **A'**. Dans ce cas, on peut avantageusement prendre comme direction du vecteur de base $\vec{X}$ la direction de la bissectrice de l'étendue angulaire du corps aimanté **10** autour de l'axe principal **A'**. Dans ce cas, le plan d'aimantation **PM** est perpendiculaire à la direction du vecteur de base $\vec{X}$, et tout plan parallèle **PMi**, est défini par les directions des vecteurs $\vec{Y}$, $\vec{Z}$. Comme on le voit à la **Fig. 5A**, dans un plan **PMi** donné, parallèle au plan d'aimantation, un point **P**$(x_i,y,z)$ du corps aimanté peut donc être défini par ses coordonnées $(x_i, y, z)$, la valeur $x_i$ étant identique pour tous les points du plan **PMi** donné. Dans un tel plan, le vecteur d'aimantation $\vec{M}(P)$ peut être défini par ses coordonnées $(m_y, m_z)$, ou encore par son orientation par rapport au vecteur de base $\vec{Y}$, qui peut être représentée par l'angle $a_{yz}$ entre le vecteur d'aimantation $\vec{M}(P)$, au point **P** considéré, et le vecteur de base $\vec{Y}$. Cet angle $a_{yz}$ représente l'orientation du vecteur aimantation au point **P**$(x_i,y,z)$ du corps aimanté.

Le vecteur d'aimantation $\vec{M}(P)$ présente une direction continûment variable dans le plan **PMi**, en fonction de la position du point P considéré du corps aimanté selon la direction Y perpendiculaire à l'axe principal dans le plan d'aimantation **PMi**. De la sorte, la fonction $a_{yz}(y)$ est une fonction continûment variable sur l'étendue de la tranche du corps aimantée contenue dans le plan **PMi** considéré, pour y variant selon la position du point dans la direction du vecteur de base $\vec{Y}$. Cette propriété est valable sur toute l'étendue du corps aimanté si on a une portion angulaire unique couvrant l'intégralité de l'étendue angulaire et associé à un plan d'aimantation unique, ou sur une portion angulaire considérée s'il y a plusieurs portions angulaires distinctes correspondant chacune à un plan d'aimantation.

De préférence, sur l'étendue de la portion angulaire du corps aimanté **10** autour de l'axe principal **A'**, correspondant au plan d'aimantation considéré, l'orientation du vecteur d'orientation $\vec{M}(P)$ présente une valeur différente pour toute position selon l'axe Y. Ainsi, sur l'étendue de la portion angulaire du corps aimanté **10** autour de l'axe principal **A'**, l'orientation du vecteur d'orientation $\vec{M}(P)$ varie sur moins de 360 degrés d'angle. En revanche, pour favoriser la précision de la détermination de la position angulaire, on utilise de préférence un corps aimanté pour lequel, sur l'étendue angulaire du corps aimanté **10** autour de l'axe principal **A'**, l'orientation du vecteur d'orientation $\vec{M}(P)$ varie continûment sur plus de 180 degrés d'angle, de préférence plus de 270 degrés d'angle, mais sur moins de 360 degrés d'angle.

De préférence, le vecteur d'aimantation $\vec{M}(P)$ présente, pour les points de la portion angulaire considérée du corps aimanté contenus dans le plan **PMi**, une direction constante ou quasi constante pour tous les points ayant une position donnée selon la direction Y perpendiculaire à l'axe principal dans le plan d'aimantation **PMi**. De la sorte, la fonction $a_{yz}(z)$ est une fonction constante, ou quasiment constante, par rapport à la variation de $a_{yz}(y)$, pour une valeur de y donnée sur l'étendue de la tranche du corps aimantée contenue dans le plan PMi considéré. Cependant, une variation de la fonction la fonction $a_{yz}(z)$ est admissible. Une telle variation sera de préférence comprise entre 0 et 30 degrés d'angle.

Dans certains modes de réalisation, la direction du vecteur d'aimantation varie linéairement ou quasi linéairement en fonction de la position du point considéré dans le corps aimanté selon la direction du vecteur de base $\vec{Y}$. Par exemple, la fonction $a_{yz}(y)$ est une fonction continûment linéaire ou quasi linéaire dans le plan PMi considéré.

Si on prend le cas de la **Fig. 5** et de la **Fig. 5a,**, et si Ts désigne la période spatiale de la variation, c'est-à-dire la distance séparant, selon la direction du vecteur de base $\vec{Y}$, deux points pour lesquels le vecteur aimantation possèderait la même direction, exprimée dans l'unité de mesure de la coordonnée y, l'expression de cet angle magnétique $a_{yz}(z)$ ayant une variation linéaire et ne dépendant que de la direction y s'écrira :

$$a_{yz}(y) = \frac{2\pi}{Ts}y + \frac{\pi}{2}$$

De préférence, notamment en mettant en oeuvre le procédé d'aimantation qui sera décrit ci-dessous, le vecteur d'aimantation $\vec{M}(P)$ sera invariant ou quasi-invariant selon la direction perpendiculaire au plan d'aimantation **PM**.

Pour les cas où le corps aimanté comporte un plan d'aimantation unique pour toute son étendue angulaire, l'expression de ce vecteur d'aimantation sera alors, dans le repère ($\mathbf{O'}, \vec{X}, \vec{Y}, \vec{Z}$) lié au corps aimanté **10,** :

$$\vec{M}(P) \begin{cases} M_x = 0 \\ M_y = \mathrm{M}.\cos(a_{yz}(y)) \\ M_z = \mathrm{M}.\sin(a_{yz}(y)) \end{cases}$$

Dans la réalisation pratique, la fonction $a_{yz}(y)$ peut être non linéaire et peut, aussi, servir à :

- gérer les effets de bord du champ magnétique créé par l'aimant ;
- imposer une réponse linéaire ou, au contraire, non linéaire voulue du système capteur.

En effet, il est par ailleurs proposé un procédé de fabrication d'un corps aimanté pour un système de détermination d'une position angulaire relative, permettant notamment de mettre en oeuvre une méthode selon l'invention.

Dans ce procédé, on fournit un corps de matériau magnétisable ayant une forme telle que définie ci-dessus. Le matériau magnétisable est notamment un matériau ferromagnétique, notamment ferromagnétique dur, ferrimagnétique, ou antiferromagnétique, capable de former, après une aimantation contrôlée, un aimant permanent. De tels matériaux incluent des alliages, par exemple de néodyme, de fer et de bore (Nd2Fe14B) de Samarium et de Cobalt (SmCo5 et Sm2Co17), et les ferrites, ainsi que les AlNiCo.

On s'intéresse tout d'abord au cas où le corps aimanté comporte un plan d'aimantation unique pour toute son étendue angulaire. Pour la mise en oeuvre du procédé on dispose, comme illustré aux **Figs. 6** et **7,** à proximité du corps de matériau magnétisable **10,** un réseau **20** de conducteurs électriques parallèles **22** comprenant plusieurs faisceaux **24** de conducteurs électriques parallèles, orientés chacun selon un axe perpendiculaire à l'axe principal **A'**. L'orientation des conducteurs électriques, ci-après dénommés conducteurs d'aimantation **22,** est, dans un plan perpendiculaire à l'axe principal A, de préférence comprise dans une plage angulaire définie par les deux rayons **R1** et **R2** issus de l'axe principal **A'** et passant par les extrémités angulaires du corps aimanté autour de l'axe principal **A',** donc, dans l'exemple illustré, passant par les faces latérales **9.**

L'orientation des conducteurs d'aimantation **22** déterminera une position angulaire relative préférentielle du corps aimanté **10** par rapport aux cellules de mesure **10, 11,** celle pour laquelle la précision de mesure la position angulaire par le système capteur **1** est en théorie la plus grande. Cette position correspond à la position angulaire sur le corps aimanté **10** définie par un rayon issu de l'axe principal **A'** et ayant l'orientation des conducteurs d'aimantation **22.** Plus on s'écartera de la position de référence, plus on risque de diminuer la précision de mesure. Pour obtenir une précision optimale sur toute la course angulaire du système capteur **1,** on peut avoir intérêt à ce que la position angulaire préférentielle soit agencée à la moitié de la course angulaire. Dans ce cas, on pourra prévoir que l'orientation des conducteurs d'aimantation corresponde à l'orientation d'une bissectrice de l'étendue angulaire du corps aimanté **10,** ou tout au moins qu'elle soit comprise dans une plage restreinte autour de l'orientation de la bissectrice. La plage restreinte est par exemple une plage de 15 degrés d'angle, centrée sur l'orientation de la bissectrice.

On appelle faisceau **24** de conducteurs d'aimantation **22** un groupe de conducteurs d'aimantation dans lesquels, à un instant donné, le courant circule dans un même sens et qui ne sont pas séparés par un conducteur d'aimantation **22** dans lequel le courant circule dans un autre sens, dans le repère lié à l'aimant. Un faisceau **24** peut comprendre un unique conducteur d'aimantation **22,** ou, de préférence, plusieurs conducteurs d'aimantation**22,** par exemple dans la gamme allant de 4 à 40 conducteurs d'aimantation **22** pour un faisceau **24.** Différents faisceaux **24** peuvent comprendre un nombre différent de conducteurs d'aimantation **22.**

Dans un faisceau **24,** certains des conducteurs d'aimantation **22** ou tous les conducteurs d'aimantation **22** peuvent être accolés les uns aux autres. Dans ce cas, on peut prévoir que les conducteurs d'aimantation **22** soient isolés électriquement les uns des autres, par exemple par une gaine isolante. A contrario, un ou plusieurs conducteurs d'aimantation **22** d'un faisceau **24** peuvent être écartés transversalement des autres conducteurs d'aimantation du même faisceau **24,** ou tous les conducteurs d'aimantation **22** peuvent être écartés les uns des autres. Un faisceau **24** peut comprendre une enveloppe externe, par exemple en matériau isolant électriquement, entourant les conducteurs d'aimantation **22** du faisceau.

Dans l'exemple des **Figs. 6** et **7,** on a illustré quatre faisceaux **24.** Dans deux des faisceaux **24,** le courant circule selon un premier sens selon l'orientation des conducteurs d'aimantation, tandis que dans les deux autres faisceaux, le courant circule selon un second sens, opposé au premier.

Un conducteur d'aimantation **22** est de préférence constitué d'un fil ou d'un barreau en matériau conducteur, par exemple en cuivre, allongé selon l'orientation.

Les faisceaux **24** sont décalés latéralement l'un de l'autre selon une direction de décalage perpendiculaire à leur orientation et perpendiculaire à l'axe principal **A'.** Cette direction de décalage est parallèle au plan d'aimantation que l'on cherche à créer. Dans les exemples illustrés aux **Figs. 7, 10** et **11,** les faisceaux **24** sont alignés selon la direction de décalage. Cependant, certains des faisceaux **24** pourraient être, en plus, décalés des autres faisceaux selon une direction perpendiculaire au plan d'aimantation que l'on cherche à créer. Ils sont disposés de préférence à proximité immédiate du corps de matériau magnétisable, de préférence à proximité immédiate de la surface terminale en regard de laquelle vont être disposés les cellules de mesure **11, 12** dans le système capteur **1,** donc la surface terminale supérieure **5** dans l'exemple illustré.

Typiquement, les faisceaux sont disposés à moins de 10 mm de la surface terminale voire à moins de 5 mm de la surface terminale.

Le procédé implique bien entendu la circulation d'un courant électrique dans les faisceaux de conducteurs d'aimantation **22,** le sens de circulation du courant étant, à un instant donné, par exemple un instant pour lequel l'intensité du courant est maximale, identique dans tous les conducteurs d'aimantation **22** d'un même faisceau **24,** et étant inverse dans deux faisceaux **24** adjacents.

Par cette circulation du courant électrique, on peut ainsi distinguer un ou plusieurs faisceaux **24** aller, formant un groupe aller de faisceaux, dans lesquels, à un instant donné, par exemple un instant pour lequel l'intensité du courant est maximale, le courant circule selon le premier sens, et un ou plusieurs faisceaux **24** retour, formant un groupe retour de faisceaux, dans lesquels, au même instant donné, le courant circule selon le second sens, inverse du premier.

De la sorte, le courant électrique circulant dans les faisceaux **24** est apte à générer, autour du réseau **20** et donc dans le corps de matériau magnétisable, un champ magnétique d'aimantation propre à aimanter le corps de matériau magnétisable. Notamment, ce courant électrique doit présenter une valeur maximale d'intensité suffisante. Par la disposition des faisceaux **24** perpendiculairement à l'axe principal **A',** et en alternant les faisceaux aller et les faisceaux retour, on peut générer un champ magnétique propre à conférer, au corps en matériau magnétisable, une aimantation telle que décrite ci-dessus.

Notamment, le champ magnétique créé par le réseau de conducteurs d'aimantation est de préférence apte à saturer magnétiquement le matériau magnétisable, en tous points de celui-ci. Une fois ainsi magnétisé, le corps en matériau magnétisable peut servir de corps de matériau magnétique **10** dans une méthode et dans un système capteur **1** selon l'invention.

On pourra pour cela adapter notamment les paramètres suivants :

- intensité du courant électrique dans un faisceau, et donc dans un conducteur, en prenant en compte notamment l'intensité maximale ;
- densité des faisceaux en conducteurs ;
- positionnement relatif des faisceaux et des conducteurs dans un faisceau ;
- nombre de conducteurs par faisceau ;
- écartement des faisceaux par rapport au corps de matériau magnétisable, et notamment par rapport à la surface enveloppe avant **3** de l'aimant, ainsi que par rapport à la surface terminale supérieure, selon la direction de l'axe principal ;
- etc....

Dans l'exemple de la **Fig. 7,** le réseau de conducteurs comporte deux faisceaux aller et deux faisceaux retour, disposés en alternance. Un premier faisceau aller et un premier faisceau retour sont disposés symétriquement de chaque côté d'un plan de symétrie du corps aimanté contenant l'axe principal **A',** à l'intérieur des limites définies par les faces latérales **9** du corps aimanté **10.** Un second faisceau aller et un second faisceau retour sont disposés symétriquement de chaque côté du plan de symétrie du corps aimanté contenant l'axe principal **A',** à l'extérieur des limites définies par les faces latérales **9** du corps aimanté.

Dans l'exemple de la **Fig. 10,** le réseau de conducteurs comporte uniquement un faisceau aller et un faisceau retour disposés symétriquement de chaque côté d'un plan de symétrie du corps aimanté contenant l'axe principal **A'.** Dans l'exemple, ils sont disposés à l'intérieur des limites définies par les faces latérales **9** du corps aimanté.

Dans l'exemple de la **Fig. 11,** le réseau de conducteurs comporte un faisceau aller et deux faisceaux retour. La configuration inverse est possible, avec un faisceau retour et deux faisceaux aller. Le faisceau unique, ici le faisceau aller, est disposé sur le plan de symétrie du corps aimanté contenant l'axe principal **A'.** Les deux faisceaux de même sens, ici les deux faisceaux retours, sont disposés symétriquement de chaque côté du plan de symétrie du corps aimanté contenant l'axe principal **A'.** Dans l'exemple, ils sont disposés aux limites définies par les faces latérales **9** du corps aimanté.

On note que différents faisceaux **24** ne comportent pas nécessairement le même nombre de conducteurs. Par exemple, le nombre de conducteurs par faisceau **24** peut diminuer au fur et à mesure que l'on s'éloigne du plan de symétrie du corps aimanté contenant l'axe principal **A'.**

Dans le groupe aller de faisceaux **24,** d'une part, et dans le groupe retour de faisceaux **24,** d'autre part, on peut prévoir que plusieurs faisceaux **24,** voire tous les faisceaux **24,** soient alimentés électriquement en parallèle. De même, dans un faisceau **24** donné, on peut prévoir que plusieurs conducteurs d'aimantation **22** ou tous les conducteurs d'aimantation, **22** soient alimentés électriquement en parallèle.

Cependant, de préférence, on prévoira que plusieurs faisceaux **24,** voire tous les faisceaux **24,** y compris des faisceaux aller et des faisceaux retour, soient connectés électriquement en série. On pourra prévoir que plusieurs conducteurs d'aimantation **22,** voire tous les conducteurs d'aimantation **22,** y compris des conducteurs d'aimantation aller et des conducteurs d'aimantation retour, soient connectés électriquement en série pour former une ou plusieurs bobines d'aimantation.

On peut ainsi prévoir que les conducteurs d'aimantation **22** des faisceaux sont formés par des tronçons d'au moins un enroulement d'un bobinage d'un fil conducteur le long duquel se succèdent, répétitivement, au moins un conducteur d'aimantation **22** d'un faisceau aller, un tronçon de liaison, et un conducteur d'aimantation **22** d'un faisceau retour, un autre tronçon de liaison et un autre un conducteur d'aimantation **22** d'un faisceau aller. Ainsi, au sein d'un réseau, on peut regrouper l'ensemble des conducteurs d'aimantation **22** en un seul enroulement de bobinage, en deux enroulements de bobinages ou en plus de deux enroulements de bobinages.

Dans une autre mode de réalisation (non représenté), un réseau de conducteurs pourrait être formé d'une grille comportant, d'un côté du corps en matériau magnétisable, une première barre de liaison à un premier potentiel électrique, et, de l'autre côté du corps en matériau magnétisable, une seconde barre de liaison à un second potentiel électrique. Chaque conducteur du réseau pourrait alors prendre la forme d'un segment rectiligne dont la longueur correspondrait à la distance entre les barres, chaque conducteur s'étendant entre les deux barres et étant relié par ses deux extrémités respectivement à la première et à la seconde barre de liaison.

Les conducteurs d'aimantation **22** présentent une longueur selon leur orientation qui s'étend entre deux têtes d'alimentation qui peuvent par exemple être constituées chacune par le tronçon de liaison dans le cadre d'un bobinage, ou par une barre de liaison dans le cadre d'un faisceau formé d'une grille. Dans les têtes d'alimentation, le courant électrique peut circuler selon une direction transversale ou sensiblement transversale par rapport à l'orientation des conducteurs. Il est souhaitable de limiter l'influence magnétique de ces courants, pour limiter les perturbations sur l'aimantation du corps de matériau magnétisable, et il est donc souhaitable que les conducteurs d'aimantation aient une longueur suffisante pour atteindre ce but. Les conducteurs d'aimantation **22** auront ainsi une longueur supérieure à l'étendue du corps de matériau magnétisable selon l'orientation des conducteurs d'aimantation **22.**

Sur la **Fig. 14,** on a illustré schématiquement un procédé permettant de réaliser un corps aimanté comportant une première portion angulaire **10.1** et au moins une deuxième portion angulaire **10.2** distinctes autour de l'axe de principal **A',** le corps aimanté présentant une aimantation dont le vecteur aimantation est tel que :

- en tout point de la première portion angulaire **10.1** du corps aimanté, le vecteur aimantation est parallèle à un premier plan d'aimantation fixe **PM1,**
- en tout point de la deuxième portion angulaire **10.2** du corps aimanté, le vecteur aimantation est parallèle à un deuxième plan d'aimantation fixe **PM2,** et
- le vecteur aimantation présente une direction continûment variable dans le plan d'aimantation considéré **PM1, PM2,** en fonction de la position du point du corps aimanté de la portion angulaire considérée selon une direction perpendiculaire à l'axe de principal **A'** dans le plan d'aimantation considéré.

Pour cela, le procédé prévoit un premier réseau **20.1** de conducteurs électriques parallèles s'étend en regard d'une première portion du corps de matériau magnétisable. Le premier réseau comprend plusieurs faisceaux **24.1** de conducteurs électriques parallèles **22** ayant une orientation **X1** perpendiculaire à l'axe principal **A'** et parallèle à un premier rayon directeur qui est issu de l'axe principal **A'** et qui est compris dans l'étendue angulaire de la première portion angulaire considérée **10.1** du corps aimanté.

Ce premier réseau comporte au moins un faisceau aller et au moins un faisceau retour.

Il est par ailleurs prévu un deuxième réseau **20.2** de conducteurs électriques parallèles, qui s'étend en regard d'une seconde portion du corps de matériau magnétisable, distincte de la première portion. Les faisceaux **24.2** de conducteurs électriques parallèles **22** du second réseau **20.2** sont orientés selon une deuxième orientation **X2** perpendiculaire à l'axe principal **(A')** et parallèle à un deuxième rayon directeur issu de l'axe principal **(A')** et compris dans l'étendue angulaire de la deuxième portion angulaire **10.2** considérée.

Le deuxième faisceau comporte au moins un faisceau aller et au moins un faisceau retour.

En créant des plans d'aimantation différenciés dans les deux portions angulaires, on peut obtenir une précision optimale sur toute la course angulaire du système capteur **1,** notamment pour des systèmes capteurs ayant un corps aimanté présentant une grande étendue angulaire. Pour encore optimiser la précision, on pourra prévoir que l'orientation des conducteurs d'aimantation de chacun des réseaux **20.1, 20.2** corresponde à l'orientation d'une bissectrice de l'étendue angulaire de la portion angulaire **10.1, 10.2** correspondante du corps aimanté **10,** ou tout au moins qu'elle soit comprise dans une plage restreinte autour de l'orientation de cette bissectrice. La plage restreinte est par exemple une plage de 15 degrés d'angle, centrée sur l'orientation de la bissectrice.

Bien entendu, le principe d'avoir plusieurs plans d'aimantation, tel que décrit ci-dessus en référence à la **Fig. 14,** avec deux plans d'aimantation différenciés pour deux portions angulaires distinctes, peut être décliné à trois, quatre, ou plus, plans d'aimantation différenciés pour autant de portions angulaires distinctes.

Comme vu plus haut, dans les exemples illustrés, le système capteur **1** peut comporter une seule cellule de mesure ou peut comporter au moins deux cellules de mesure. Dans le cas de la présence de deux cellules de mesure, les points de mesure **C1** et **C2** de la première et de la deuxième cellule **11, 12** sont de préférence agencés dans un même plan perpendiculaire à l'axe de rotation **A,** décalé axialement selon la direction de l'axe de rotation **A** par rapport à la face terminale supérieure **5** du corps aimanté **10.** Dans le système capteur **1,** la cellule **11** ou chacune des deux cellules de mesure **11, 12** détermine, en un point de mesure correspondant **C1, C2,** des valeurs représentatives de l'orientation du champ magnétique **B** créé par le corps aimanté **10** en ces points de mesure **C1, C2.** Chaque cellule de mesure **11, 12** délivre aux moins deux signaux électriques, par exemple numériques et/ou analogiques, représentatifs respectivement d'une composante primaire et d'une composante secondaire du vecteur représentatif du champ magnétique **B** induit par le corps aimanté **10** au point de mesure de la cellule considérée, respectivement selon un axe de mesure primaire **AP1, AP2** et selon un axe de mesure secondaire **AS1, AS2** qui sont orthogonaux entre eux et contenus dans un plan parallèle à l'axe de rotation **A.** Bien entendu, l'invention recouvre des modes de réalisation pouvant mettre en oeuvre des cellules de mesure ayant des capacités supérieures, par exemple délivrant plus de deux signaux et/ou de signaux représentatifs par exemple de plus de deux composantes du vecteur représentatif du champ magnétique **B** induit par le corps aimanté **10** au point de mesure de la cellule considérée.

Dans l'exemple qui sera décrit plus en détail plus bas, on pourra utiliser, pour la détermination de la position angulaire relative, uniquement deux signaux électriques représentatifs respectivement d'une composante primaire et d'une composante secondaire du vecteur représentatif du champ magnétique **B** induit par le corps aimanté **10** au point de mesure de la cellule considérée, ceci même si la cellule utilisée serait capable de donner les trois composantes. Ces deux composantes définissent, donc, pour chaque cellule un plan de mesure en deux dimensions.

Dans l'exemple de réalisation comportant une unique cellule de mesure **11,** illustré à la **Fig. 1A,** l'axe de mesure primaire **AP1** est de préférence parallèle à l'axe de rotation **A,** et perpendiculaire au vecteur de base radial $\overrightarrow{Xo}$**,** et donc parallèle au vecteur de base $\overrightarrow{Yo}$**,** donc tangentiel par rapport à une rotation autour de l'axe de rotation **A.** Autrement dit, de préférence, le plan de mesure est perpendiculaire au vecteur de base radial $\overrightarrow{Xo}$**,** qui forme un rayon issu de l'axe **A** et passant par le point de mesure.

Dans l'exemple de réalisation comportant deux cellules **11, 12,** illustré à la **Fig. 1B,** les plans de mesure des deux cellules de mesure **11, 12** sont parallèles, et même confondus. Pour cela, on a choisi que les axes de mesure primaires **AP1, AP2** des deux cellules de mesure **11, 12** sont contenus dans un même plan parallèle à l'axe de rotation **A,** donc parallèle à un plan défini par les vecteurs de base $\overrightarrow{Xo}$ et $\overrightarrow{Yo}$**.** De plus, dans l'exemple de réalisation comportant deux cellules **11, 12,** les axes de mesure primaires **AP1, AP2** des deux cellules de mesure **11, 12** sont parallèles entre eux et parallèles à l'axe de rotation **A,** donc parallèles à la direction du vecteur de base $\overrightarrow{Zo}$**.** Autrement dit, le plan de mesure des cellules de mesure **11, 12** est de préférence parallèle à l'axe de rotation **A.**

Par ailleurs, dans les deux exemples, le plan de mesure de la cellule de mesure ou de chacune des cellules de mesure **11, 12** peut être parallèle au plan d'aimantation du corps aimanté **10** pour une position de référence entre la première pièce **14** et la deuxième pièce **16,** c'est-à-dire pour une position de référence entre le corps aimanté **10** et les cellules **11, 12.** Cette position de référence est de préférence comprise dans la course angulaire entre la première pièce **14** et la deuxième pièce **16,** c'est-à-dire dans la course angulaire relative entre le corps aimanté **10** et les cellules **11, 12.**

Dans l'exemple de réalisation comportant une seule cellule **11,** illustré à la **Fig. 1A**, on a prévu que la position de référence, pour laquelle le plan de mesure des cellules est strictement parallèle au plan d'aimantation, correspond à la position pour laquelle la cellule de mesure **10** est disposée en regard de la position préférentielle déterminée par l'orientation des conducteurs électriques lors de l'aimantation du corps aimanté dans le cas où le procédé d'aimantation ci-dessus est utilisé. Dans l'exemple de réalisation comportant deux cellules **11, 12,** illustré à la **Fig. 1B**, on a prévu que la position de référence, pour laquelle le plan de mesure des cellules est strictement parallèle au plan d'aimantation, correspond à la position pour laquelle les cellules de mesure **10, 11** sont disposées symétriquement par rapport à la position préférentielle déterminée par l'orientation des conducteurs électriques lors de l'aimantation du corps aimanté dans le cas où le procédé d'aimantation ci-dessus est utilisé.

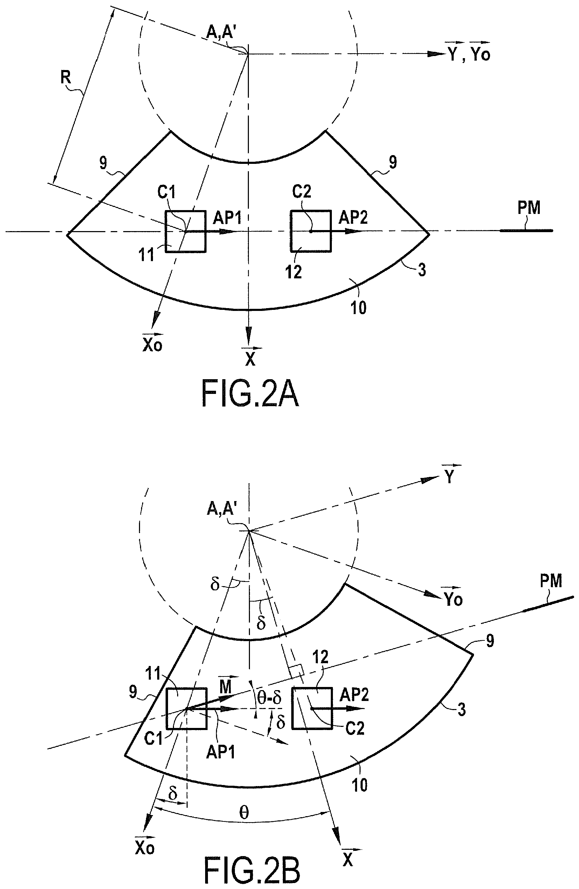

Dans les deux exemples illustrés, cette position de référence, pour laquelle le plan de mesure de la cellule ou des cellules est strictement parallèle au plan d'aimantation, est agencée à la moitié de la course angulaire. Elle est illustrée plus particulièrement à la **Fig. 2A** pour l'exemple de réalisation comportant deux cellules **11, 12.** On pourrait prévoir que cette position de référence soit comprise dans une plage restreinte autour de la bissectrice de la course angulaire. La plage restreinte est par exemple une plage de 15 degrés d'angle, centrée sur l'orientation de la bissectrice. Dans d'autres variantes, cette position de référence pourrait correspondre à une extrémité de la course angulaire.

Dans l'exemple de réalisation comportant une seule cellule **11**, le premier point de mesure **C1** de la première cellule de mesure **11** est agencé une distance **R** de l'axe de rotation **A**. Cette distance est telle que le point de mesure **C1** est agencé en regard de la face terminale supérieure **5** du corps aimanté, de préférence pour toute la course angulaire du système capteur.

Dans l'exemple de réalisation comportant deux cellules **11, 12,** le premier point de mesure **C1** de la première cellule de mesure **11** et le deuxième point de mesure **C2** de la deuxième cellule de mesure sont agencés à égale distance **R** de l'axe de rotation **A**. Cette distance est telle que les points de mesure **C1** et **C2** sont agencés aussi en regard de la face terminale supérieure **5** du corps aimanté, de préférence pour toute la course angulaire du système capteur.

Ainsi, dans les deux cas, on peut disposer le ou les points de mesure de la ou les cellules de mesure à une distance R de l'axe de rotation **A,** qui est inférieure au rayon de la surface enveloppe avant **3** du corps aimanté, formant le rayon externe du corps aimanté.

Cet agencement est particulièrement avantageux car il permet de limiter l'encombrement du système capteur selon la direction radiale par rapport à l'axe de rotation **A.**

Avantageusement, dans un système à deux cellules, les deux points de mesure peuvent être, comme illustré, agencés dans des positions écartées d'un angle fixe **2δ,** non nul, et strictement inférieur à 90 degrés d'angle autour de l'axe de rotation **A**. De préférence, cet angle d'écartement **2δ** est compris dans la gamme allant de 1,5 à 30 degrés d'angle, correspondant à une distance entre les deux points de mesure qui est par exemple comprise entre 1 mm et 5 mm. Les points de mesure **C1** et **C2** de la première et de la deuxième cellule **11, 12** sont des points distincts, écartés l'un de l'autre autour de l'axe de rotation **A.** La distance minimale entre les deux points de mesure doit être telle que les valeurs représentatives du champ magnétique créé en ces deux points par le corps aimanté diffèrent d'un écart supérieur au pouvoir de résolution des cellules de mesure. Autrement dit, la première et la deuxième cellule de mesure ne doivent pas délivrer, en tant que résultat de leurs mesures respectives en ces deux points, les mêmes valeurs représentatives du vecteur représentatif du champ magnétique.

Par ailleurs, dans cet exemple, la première et la deuxième cellule de mesure **11, 12** sont de préférence agencées sur la seconde pièce **16** de telle sorte que les axes de mesure primaires **AP1** de la première et **AP2** de la deuxième cellule de mesure **11, 12** sont parallèles entre eux, et que les axes de mesure secondaires **AS1** de la première et **AS2** de la deuxième cellule de mesure sont parallèles entre eux. Autrement dit, les deux cellules de mesure **11, 12,** notamment leurs éléments de mesure, sont agencées parallèlement l'une à l'autre. De préférence, pour chaque cellule, l'un de l'axe de mesure primaire **AP1, AP2** ou de l'axe de mesure secondaire **AS1, AS2** est parallèle à l'axe de rotation **A.**

Dans l'exemple illustré, les axes de mesure primaires **AP1**, **AP2** de la première et de la deuxième cellule de mesure **11, 12** sont orientés vectoriellement dans le même sens, et les axes de mesure secondaires **AS1, AS2** de la première et de la deuxième cellule de mesure sont aussi orientés vectoriellement dans le même sens. Autrement dit, les deux cellules de mesure **11, 12,** notamment leurs éléments magnéto-sensibles, sont agencées dans le même sens. Cependant, les axes de mesure primaires **AP1, AP2** de la première et de la deuxième cellule de mesure **11, 12** et/ou les axes de mesure secondaires **AS1, AS2** de la première et de la deuxième cellule de mesure peuvent être orientés vectoriellement selon les deux sens opposés de la même direction. Dans ce cas, il faudra cependant exprimer les valeurs algébriques des composantes primaires et secondaires par rapport à un même sens, sur la même base vectorielle, donc prendre en compte la valeur opposée d'une des deux valeurs algébriques délivrées par la cellule.

Comme dans l'exemple de réalisation illustré comportant deux cellules **11, 12,** la première et la deuxième cellule de mesure **11, 12** peuvent être agencées sur la seconde pièce **16** de telle sorte que les axes de mesure primaires de la première et de la deuxième cellule de mesure, ou les axes de mesure secondaires de la première et de la deuxième cellule de mesure, sont :

- orientés perpendiculairement à la direction d'une bissectrice de l'écart angulaire entre les deux points de mesure **C1, C2,** mesuré autour de l'axe de rotation **A** dans un plan perpendiculaire à l'axe de rotation **A,** et
- orientés perpendiculairement à l'axe de rotation **A.**

On peut ainsi, comme illustré plus en détail à la **Fig. 2B,** prévoir que la première cellule **11** et la deuxième cellule **12** de mesure soient agencées sur la seconde pièce **16** de telle sorte que les axes de mesure primaires **AP1, AP2** de la première et de la deuxième cellule de mesure **11, 12** sont orientés :

- perpendiculairement à la direction d'une bissectrice de l'écart angulaire **2δ** entre les deux points de mesure **C1, C2,** mesuré autour de l'axe de rotation **A** dans un plan perpendiculaire à l'axe de rotation **A,** et
- perpendiculairement à l'axe de rotation **A.**

Aux **Figs. 2 à 4,** on a ainsi illustré le cas dans lequel les axes de mesure primaires **AP1, AP2** de la première et de la deuxième cellule de mesure sont orientés en formant un angle δ par rapport à la direction arbitraire du vecteur de base $\overrightarrow{Yo}$. Cet angle résulte du choix arbitraire de l'orientation du vecteur de base radial $\overrightarrow{Xo}$, qui est choisi pour passer par le point de mesure **C1** de la première cellule. On remarque que cet angle δ correspond à la moitié de l'écart angulaire **2δ** entre les deux points de mesure **C1, C2,** mesuré autour de l'axe de rotation **A** dans un plan perpendiculaire à l'axe de rotation **A.** Par ailleurs, les axes de mesure secondaires **AS1, AS2** de la première et de la deuxième cellule de mesure sont orientés selon la direction du vecteur de base $\overrightarrow{Zo}$. Cependant, encore d'autres orientations sont possibles.

Il existe de nombreuses cellules, disponibles commercialement, qui permettent d'obtenir ces mesures.

Un exemple de cellule utilisable dans l'invention peut ainsi mettre en oeuvre un composant « MLX90365 Triaxis Position Sensor IC » qui est commercialisé par la société Melexis NV, Rozendaalstraat 12, B-8900 Ieper, Belgique, et décrite notamment dans la documentation « MLX90365 Triaxis Position Sensor IC Datasheet », numéro de révision 5.8, datée du 01.11.2016. D'autres références du même constructeur peuvent aussi être utilisées, comme les références MLX90333 ou MLX90364.

Ce type de cellule de mesure **11, 12** assure une mesure du champ magnétique en un seul point, en minimisant le nombre de circuits intégrés et en simplifiant la production par diminution du nombre de pièces, sachant que chaque composant introduit des tolérances liées aux incertitudes de montage. La notion de mesure en un seul point s'apprécie en fonction de la résolution spatiale de la mesure de position délivrée par le capteur. Chaque cellule de mesure **11, 12** peut comprendre par exemple une unité magnéto-sensible composée généralement d'au moins deux éléments magnéto-sensibles, très proches l'un de l'autre au point d'être considérés au même point, et dont les sorties sont éventuellement utilisées par une unité de calcul de la cellule de mesure. Très souvent, l'unité magnéto-sensible et l'unité de calcul font partie du même composant électronique, ce qui permet de réduire le coût et d'augmenter la fiabilité du capteur. Il est envisageable de prévoir que les deux cellules de mesure **11, 12** soient intégrées dans un même composant électronique, lequel peut comprendre une unité de calcul commune aux deux cellules. Cependant, dans le cadre de l'invention, il peut être prévu que les deux cellules soient munies d'une unité de communication pour communiquer des informations à une unité de calcul distante, par exemple hébergée dans une unité de contrôle électronique (ECU) ou un ordinateur.

Avec un tel type de cellule, on peut obtenir, en chacun des points de mesure **C1, C2,** au moins deux composantes **By, Bz** du vecteur représentatif du champ magnétique **B** créé par le corps aimanté **10** dans un repère orthogonal. Les deux repères ont des origines différentes, respectivement au point de mesure **C1, C2** considéré, mais des vecteurs de base identiques. De manière native, une cellule délivre des signaux électriques des composantes du vecteur représentatif du champ magnétique **B** selon l'axe de mesure primaire **AP1** et selon l'axe de mesure secondaire **AS1.** La première cellule **11** permet notamment d'obtenir, dans le plan de mesure, une première composante primaire **By1,** selon l'axe de mesure primaire **AP1,** du vecteur représentatif du champ magnétique **B** au point **C1,** et une première composante secondaire **Bz1,** selon l'axe de mesure secondaire **AS1,** du vecteur représentatif du champ magnétique **B** créé par le corps aimanté au point **C1.** La deuxième cellule **12** permet notamment d'obtenir, dans le plan de mesure, une deuxième composante primaire **By2,** selon l'axe de mesure primaire **AP2**, du vecteur représentatif du champ magnétique **B** au point **C2**, et une deuxième composante secondaire **Bz2,** selon l'axe de mesure secondaire **AS2,** du vecteur représentatif du champ magnétique **B** créé par le corps aimanté au point **C2.** Par de simples opérations de trigonométrie, ces composantes peuvent être exprimées dans les repères respectivement **(C1, $\overrightarrow{Yo}$, $\overrightarrow{Zo}$)** et ou **(C2, $\overrightarrow{Yo}$, $\overrightarrow{Zo}$).**

On notera que si le plan de mesure n'est pas strictement parallèle au plan d'aimantation, la cellule relèvera des mesures en projection. On trouve cette absence de parallélisme du fait de la rotation relative du corps aimanté par rapport aux cellules. Cette absence de parallélisme peut aussi être due à une inclinaison entre le plan de mesure et le plan d'aimantation autour d'un axe perpendiculaire à l'axe de rotation et/ou à l'axe principal **A',** et perpendiculaire à un rayon issu de cet axe. Cette inclinaison revient à une différence d'inclinaison du plan de mesure et du plan d'aimantation par rapport à l'axe de rotation et/ou à l'axe principal **A'.** Dans l'invention, cette différence d'inclinaison sera peu influente si elle est inférieure à 30 degrés d'angle, de préférence inférieure à 20° d'angle. Dans ce cas, on peut considérer que le plan de mesure et le plan d'aimantation sont parallèles. Dans l'invention, cette différence d'inclinaison sera négligeable si elle est inférieure à 5 degrés d'angle et, dans ce cas, on peut considérer que le plan de mesure et le plan d'aimantation sont strictement parallèles.

Dans le cadre de l'invention, il est prévu de déterminer une valeur représentative de la position angulaire relative entre les deux pièces **14, 16** sur une course angulaire autour d'un axe de rotation **(A).** Cette position angulaire peut être représentée par l'angle Θ entre le vecteur de base radial $\overrightarrow{Xo}$ lié à la première pièce **14,** par exemple choisi arbitrairement comme étant celui passant par le point de mesure de la cellule de mesure ou de la première cellule de mesure, suivant le nombre de cellules, et le vecteur de base $\overrightarrow{X}$ lié à la deuxième pièce.

Comme illustré sur la **Fig. 8,** on comprend ainsi qu'une méthode **100** selon l'invention comprend une étape **110** d'équipement de la première pièce **14** avec un corps aimanté **10,** tel que décrit plus haut.

On décrit ici plus particulièrement une méthode différentielle mettant en oeuvre deux cellules.

La méthode comprend une étape **120** d'équipement de la seconde pièce **16** avec une première cellule de mesure **11** en un premier point de mesure **C1** et avec une deuxième cellule de mesure **12** en un deuxième point de mesure **C2,** selon les modalités indiquées plus haut.

Dans la méthode, chaque cellule de mesure délivre **130** au moins deux signaux électriques représentatifs respectivement d'une composante primaire **By$_1$, By$_2$** et d'une composante secondaire **Bz$_1$, Bz$_2$** du vecteur représentatif du champ magnétique **B(1), B(2)** créé par le corps aimanté **10** au point de mesure **C1, C2** de la cellule considérée, respectivement selon un axe de mesure primaire **AP1, AP2** et selon un axe de mesure secondaire **AS1, AS2,** lesquels forment un plan de mesure parallèle à l'axe de rotation **A.**

Dans la méthode, la première et la deuxième cellule de mesure **11, 12** peuvent être agencées sur la seconde pièce **16** de telle sorte que les axes de mesure primaires **AP1, AP2** de la première et de la deuxième cellule de mesure sont parallèles entre eux, préférentiellement orientés vectoriellement dans le même sens, et que les axes de mesure secondaires **AS1, AS2** de la première et de la deuxième cellule de mesure sont parallèles entre eux, préférentiellement orientés vectoriellement dans le même sens. Autrement dit, les plans de mesure des deux cellules sont parallèles. Si ce n'est pas le cas, un changement de repère sera opéré pour exprimer les composantes dans un même repère.

Les étapes ci-dessus de la méthode seront avantageusement mises en oeuvre en tirant parti d'un système capteur **1** à deux cellules de mesure tel que décrit ci-dessus.

A l'étape **150,** la méthode détermine une valeur représentative de la position angulaire relative θ entre les deux pièces en déterminant **140** un angle brut « gamma », dont la tangente est fonction d'une composition différentielle des dites composantes **By$_1$, By$_2$, Bz$_1$, Bz$_2$** déterminées par les cellules. Cet angle brut « gamma » est égal ou est représentatif de l'orientation de l'angle du vecteur de champ magnétique créé au point de mesure par le corps aimanté. Cet angle brut est parfois appelé « angle magnétique ». La composition différentielle peut notamment être un rapport algébrique entre d'une part une valeur représentative de la différence des premières composantes **By$_1$, By$_2$,** éventuellement pondérées, et d'autre part une valeur représentative de la différence des secondes composantes **Bz$_1$, Bz$_2$,** éventuellement pondérées.

Selon un mode de réalisation d'une méthode différentielle, un angle brut est calculé dont la tangente est fonction d'un rapport entre d'une part la différence des composantes secondaires et d'autre part la différence des composantes primaires, mesurées par les deux cellules **11, 12** pour une position angulaire relative donnée.

Cette méthode comporte ainsi une ou plusieurs étapes de calcul qui peuvent être mises en oeuvre dans une unité calcul, cette dernière étant intégrée dans le système capteur **1,** ou étant à distance, par exemple dans une unité électronique de contrôle ou un ordinateur. L'unité de calcul comporte typiquement un module ou plusieurs modules de mémoire, au moins un processeur, un module d'entrée/sortie des données, et éventuellement un module de communication. Les étapes de calcul de la méthode sont typiquement mises en oeuvre par un programme informatique contenant les instructions correspondantes et stockées dans le module de mémoire.

Ainsi, dans un exemple, il est prévu de calculer une valeur $\Delta B_y$ représentative de la différence entre la première composante primaire By$_1$ et la deuxième composante primaire By$_2$, mesurées respectivement aux points **C1** et **C2.** Typiquement cette valeur de différence peut s'écrire sous la forme d'une fonction, par exemple une fonction linéaire ou affine :

$$\Delta B_y = f_y \,(By_1 - By_2)$$

Par exemple, on pourrait avoir :

$$\Delta B_y = a_y*(By_1 - By_2) + c_y$$

De la manière la plus simple, on peut avoir :

$$\Delta B_y = By_1 - By_2 \qquad (1)$$

De même, il est prévu de calculer une valeur $\Delta B_z$ représentative de la différence entre la première composante secondaire $Bz_1$ et la deuxième composante secondaire $Bz_2$, mesurées respectivement aux points C1 et C2. Typiquement cette valeur de différence peut s'écrire sous la forme d'une fonction, par exemple une fonction linéaire ou affine :

$$\Delta B_z = f_z (Bz_1 - Bz_2)$$

Par exemple, on pourrait avoir :

$$\Delta B_z = a_z * (Bz_1 - Bz_2) + c_y$$

De la manière la plus simple, on peut avoir :

$$\Delta B_z = Bz_1 - Bz_2 \qquad (2)$$

Dans ce cas, l'invention prévoit de déterminer un angle brut gamma comme étant l'arc dont la tangente est représentative d'un rapport entre d'une part la différence des composantes secondaires et d'autre part la différence des composantes primaires, ce rapport pouvant être le rapport $\Delta B_z / \Delta B_y$ ou le rapport inverse $\Delta B_y / \Delta B_z$. En fonction du rapport choisi, on obtiendra l'angle brut gamma ou son complémentaire (90°- gamma), duquel on reviendra aisément à l'angle brut recherché.

Ainsi, cette valeur d'angle brut gamma peut s'écrire sous la forme d'une fonction :

$$\text{gamma} = \text{Arctan} \{ f [\Delta B_z / \Delta B_y] \} \text{ ou gamma} = \text{Arctan} \{ f [\Delta B_y / \Delta B_z] \}$$

Soit, par exemple :

$$\text{gamma} = \text{Arctan} \{ f [ f_z (Bz_1 - Bz_2) / f_y (By_1 - By_2)] \}$$

Dans cette équation, la fonction f peut être considérée comme une fonction de filtrage des valeurs mesurées. De la manière la plus simple, on peut avoir :

$$\text{gamma} = \text{Arctan} \{ K_{yz} \times [(Bz_1 - Bz_2) / (By_1 - By_2)] \} \qquad (3)$$

où $K_{xy}$ est une valeur égale à 1 pour le calcul théorique de la valeur de l'angle du champ magnétique dans le plan de mesure de la cellule, mais il est parfois avantageux d'utiliser une autre valeur afin de compenser des biais de mesure.

Dans une mode de réalisation à une seule cellule, l'angle brut peut être obtenu très facilement, par exemple sous la forme :

$$\text{gamma} = \text{Arctan} \{ K_{yz} \times [(Bz_1 - Bz_2) / (By_1 - By_2)] \}$$

L'angle brut correspond à une orientation du champ magnétique au point de mesure, ou en est représentatif. Par le fait que l'aimantation du corps aimanté est variable comme expliqué ci-dessus, le champ magnétique créé par le corps aimanté, à l'extérieur du corps aimanté, présente lui aussi une orientation variable. En veillant à ce que l'orientation du vecteur champ magnétique au point de mesure varie sur moins de 360 degrés d'angle sur la course angulaire relative des deux pièces **14, 16,** il est possible de déterminer une relation, si possible bijective, entre l'angle brut et la position angulaire relative entre les deux pièces. Cette relation peut être déterminée par exemple par calcul, par simulation, ou par apprentissage.

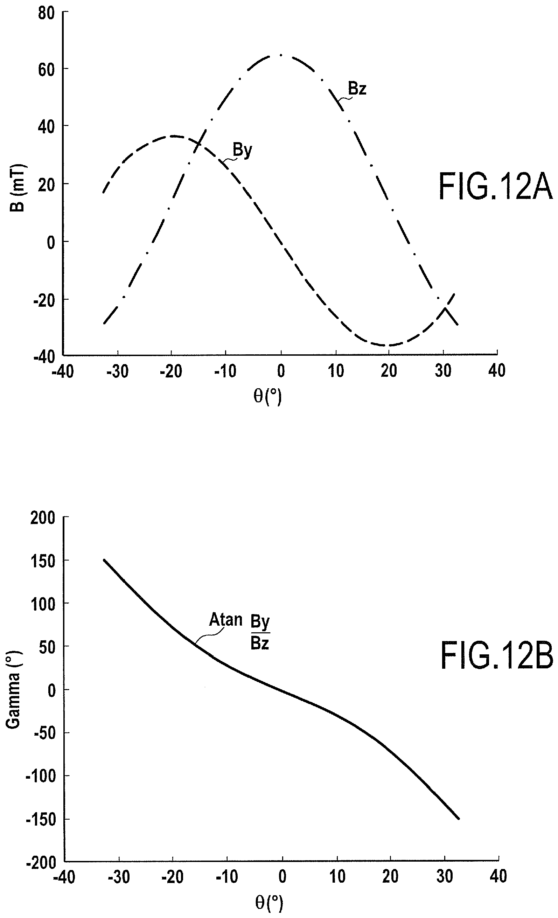

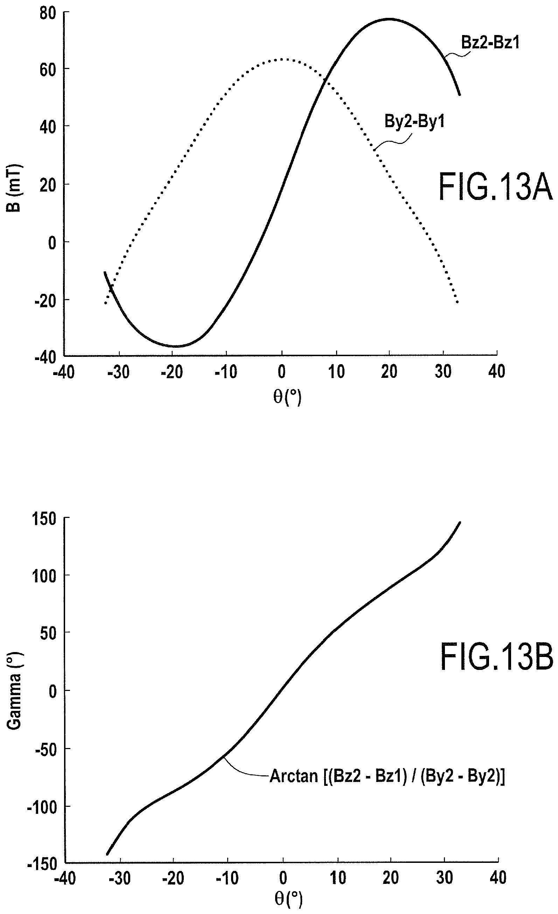

Afin d'illustrer le fonctionnement du capteur présenté à la **Fig. 5,** les signaux que l'on peut obtenir avec un tel capteur sont montrés aux **Figs. 12A, 12B** et **13A** et **13B.** Ces résultats sont obtenus par simulation.

Ces figures montrent, respectivement pour une configuration à une cellule de mesure, et pour une configuration à deux cellules de mesure les signaux de champ simples et différentiels sur une course de 65 degrés pour un capteur de position angulaire ayant les paramètres suivants :

- Rayon intérieur du corps : 15,5 mm
- Rayon extérieur aimanté : 21,5 mm
- Rayon de mesure : 18,5 mm
- étendue angulaire aimantée : 78°
- Epaisseur de l'aimant : 4 mm
- Entrefer de mesure : 1,7 mm

La **Fig. 12A** représente les signaux By et Bz mesurés par une cellule de mesure en un point au milieu de la course en rotation. La **Fig. 12B** représente l'angle obtenu par le calcul de l'arc tangente du rapport By/Bz à partir des signaux à la **Fig. 12A.**

La **Fig. 13A** représente les signaux différentiels By2-By1 et Bz2-Bz1 obtenus à partir des composantes du champ magnétique aux points C1 et C2 écartés chacun respectivement de 0,95 mm de part et d'autre du milieu de la course en rotation dans la direction tangentielle, c'est-à-dire dans la position des **Figs.2A et 2B.** La **Fig. 13B** représente l'angle obtenu par le calcul de l'arc tangente du rapport (Bz2-Bz1)/(By2-By1) des signaux différentiels à partir des signaux à la **Fig. 13A.**

La mesure basée mettant en oeuvre une seule cellule a l'avantage de simplicité et, souvent, elle nécessite moins d'effort pour avoir un champ mesuré (champ magnétique) suffisant.

La méthode basée sur deux cellules exploitées en mode différentiel a l'avantage d'être robuste par rapport aux champs magnétiques externes, cependant il peut être plus difficile d'atteindre le signal mesuré (la différence du champ magnétique) suffisant.

La présente invention permet d'obtenir un champ magnétique variable sur la course du capteur, ce qui augmente la précision du capteur et, souvent, donne la possibilité d'utiliser la méthode différentielle.

L'invention n'est pas limitée aux exemples décrits et représentés car diverses modifications peuvent y être apportées sans sortir de son cadre.

## Revendications

1. - Méthode de détermination d'une position angulaire relative d'une première pièce **(14)** par rapport à une seconde pièce **(16)** sur une course angulaire autour d'un axe de rotation **(A),** dans laquelle :

    - la première pièce est équipée avec un corps aimanté **(10),** en forme de secteur angulaire courbé autour de l'axe de rotation **(A),** ledit secteur angulaire comportant une portion angulaire unique ou plusieurs portions angulaires successives autour de l'axe de rotation **(A),** le corps aimanté présentant, en tout point d'au moins une portion angulaire du corps aimanté, une aimantation dont le vecteur aimantation :

        ◦ est parallèle à un plan d'aimantation (PM) fixe pour ladite portion angulaire du corps aimanté, et
        ◦ présente une direction continûment variable dans le plan d'aimantation en fonction de la position du point du corps aimanté selon une direction perpendiculaire à l'axe de rotation **(A)** dans le plan d'aimantation ;

    - la seconde pièce est équipée avec au moins une première cellule de mesure **(11)** en un premier point de mesure **(C1),** délivrant deux signaux électriques représentatifs respectivement d'une composante primaire **(By$_1$)** et d'une composante secondaire **(B$_{z1}$)** du champ magnétique créé par le corps aimanté **(10)** au point de mesure **(C1)** de la cellule **(10, 11)** considérée, dans un plan de mesure,
    - la méthode détermine une valeur représentative (θ) de la position angulaire relative entre les deux pièces en fonction des dites composantes mesurées par la cellule de mesure **(11)** pour une position angulaire relative (θ) donnée ;

    **caractérisée en ce que** le plan d'aimantation (PM) du corps aimanté (10) est parallèle à l'axe de rotation **(A).**

2. - Méthode selon la revendication **1, caractérisée en ce que** le corps aimanté **(10)** comporte une portion angulaire unique, le corps aimanté présentant, en tout point du corps aimanté, une aimantation dont le vecteur aimantation :

    ◦ est parallèle à un plan d'aimantation fixe unique pour le corps aimanté, et

∘ présente une direction continûment variable dans le plan d'aimantation en fonction de la position du point du corps aimanté selon une direction perpendiculaire à l'axe de rotation (A) dans le plan d'aimantation.

3. - Méthode selon la revendication **2, caractérisée en ce que** le plan d'aimantation **(PM)** est perpendiculaire à un rayon issu de l'axe de rotation **(A)** et compris dans l'étendue angulaire du corps aimanté autour de l'axe principal **(A'),** par exemple orienté selon une bissectrice de l'étendue angulaire du corps aimanté ou de la course angulaire.

4. **-** Méthode selon la revendication **1, caractérisée en ce que** le corps aimanté **(10)** comporte au moins une première portion angulaire et au moins une deuxième portion angulaire distinctes autour de l'axe de rotation **(A),** le corps aimanté présentant une aimantation dont le vecteur aimantation :

   ∘ en tout point de la première portion angulaire du corps aimanté, est parallèle à un premier plan d'aimantation fixe,
   ∘ en tout point de la deuxième portion angulaire du corps aimanté, est parallèle à un deuxième plan d'aimantation fixe, et
   ∘ présente une direction continûment variable dans le plan d'aimantation considéré en fonction de la position du point de la portion angulaire considérée du corps aimanté selon une direction perpendiculaire à l'axe de rotation **(A)** dans le plan d'aimantation considéré.

5. - Méthode selon l'une des revendications précédentes, **caractérisée en ce que** la seconde pièce est équipée avec une deuxième cellule de mesure **(12)** en un deuxième point de mesure **(C2),** délivrant deux signaux électriques représentatifs respectivement d'une composante primaire ($By_2$) et d'une composante secondaire ($B_{z2}$) du champ magnétique créé par le corps aimanté **(10)** au point de mesure **(C2)** de la cellule **(10, 11)** considérée, dans le plan de mesure, et **en ce que** la méthode détermine une valeur représentative (θ) de la position angulaire relative entre les deux pièces en déterminant un angle brut **(gamma)** dont la tangente est fonction d'une composition différentielle des dites composantes mesurées par les deux cellules **(11, 12)** pour une position angulaire relative (θ) donnée.

6. - Méthode selon la revendication **5, caractérisée en ce que** la première et la deuxième cellule de mesure **(11, 12)** sont agencées sur la seconde pièce de telle sorte que les axes de mesure primaires **(AP1)** de la première et de la deuxième cellule de mesure sont parallèles entre eux, et que les axes de mesure secondaires **(AS2)** de la première et de la deuxième cellule de mesure sont parallèles entre eux.

7. - Méthode selon l'une des revendications **5** ou **6, caractérisée en ce que** la méthode détermine une valeur représentative (θ) de la position angulaire relative entre les deux pièces en déterminant un angle brut **(gamma)** dont la tangente est fonction d'un rapport entre d'une part la différence des composantes secondaires ($\Delta B_z$) et d'autre part la différence des composantes primaires ($\Delta B_y$), mesurées par les deux cellules **(11, 12)** pour une position angulaire relative (θ) donnée.

8. - Méthode selon l'une des revendications précédentes, **caractérisée en ce que** le premier point de mesure **(C1)** de la première cellule de mesure et, le cas échéant, le deuxième point de mesure **(C2)** de la deuxième cellule sont agencés à une distance **(R)** de l'axe de rotation **(A)** qui est inférieure au rayon d'une surface cylindrique externe du corps aimanté, en étant décalé(s) du corps aimanté selon la direction de l'axe de rotation **(A).**

9. - Méthode selon l'une des revendications précédentes, **caractérisée en ce que** le plan de mesure **((AP1,AS1), (AP2, AS2))** de la ou des cellules de mesure est/sont parallèles à l'axe de rotation **(A).**

10. - Système de capteur pour la détermination d'une position angulaire relative d'une première pièce **(14)** par rapport à une seconde pièce **(16)** sur une course angulaire autour d'un axe de rotation **(A),** le système comprenant :

   - un corps aimanté **(10)** en forme de secteur angulaire courbé autour d'un axe principal **(A')** parallèle à l'axe de rotation **(A),** ledit secteur angulaire comportant une portion angulaire unique ou plusieurs portions angulaires successives autour de l'axe principal **(A'),** et le corps aimanté **(10)** présentant une aimantation ayant, en tout point d'au moins une portion angulaire du corps aimanté, une aimantation dont le vecteur aimantation :

      ∘ est parallèle à un plan d'aimantation (PM) fixe pour ladite portion angulaire du corps aimanté, et
      ∘ présente une direction continûment variable dans le plan d'aimantation en fonction de la position du point du corps aimanté selon une direction perpendiculaire à l'axe de rotation dans le plan d'aimantation ;

   - une première cellule de mesure **(11)** en un premier point de mesure **(C1),** délivrant deux signaux électriques représentatifs respectivement d'une composante primaire ($B_{y1}$) et d'une composante secondaire ($B_{z1}$) du champ magnétique créé par le corps aimanté **(10)** au point de mesure **(C1)** de la cellule **(10, 11)** considérée, dans un plan de mesure,
- une deuxième cellule de mesure **(12)** en un deuxième point de mesure **(C2)**, délivrant deux signaux électriques représentatifs respectivement d'une composante primaire ($B_{y2}$) et d'une composante secondaire ($B_{z2}$) du champ magnétique créé par le corps aimanté **(10)** au point de mesure **(C2)** de la cellule **(10, 11)** considérée, dans le plan de mesure ;

**caractérisé en ce que** le plan d'aimantation (PM) du corps aimanté (10) est parallèle à l'axe de rotation **(A).**

**11.** - Système de capteur selon la revendication **10, caractérisée en ce que** le corps aimanté **(10)** comporte une portion angulaire unique, le corps aimanté présentant, en tout point du corps aimanté, une aimantation dont le vecteur aimantation :

o est parallèle à un plan d'aimantation fixe unique pour le corps aimanté, et
o présente une direction continûment variable dans le plan d'aimantation en fonction de la position du point du corps aimanté selon une direction perpendiculaire à l'axe principal **(A')** dans le plan d'aimantation.

**12.** - Système de capteur selon la revendication **11, caractérisé en ce que** le plan d'aimantation est perpendiculaire à un rayon issu de l'axe principal **(A')** et compris dans l'étendue angulaire du corps aimanté autour de l'axe principal **(A'),** par exemple orienté selon une bissectrice de l'étendue angulaire du corps aimanté ou de la course angulaire.

**13.** - Système de capteur selon la revendication **10, caractérisé en ce que** le corps aimanté **(10)** comporte au moins une première portion angulaire et au moins une deuxième portion angulaire distinctes autour de l'axe de principal **(A'),** le corps aimanté présentant une aimantation dont le vecteur aimantation :

o est parallèle à un premier plan d'aimantation fixe, en tout point de la première portion angulaire du corps aimanté,
o est parallèle à un deuxième plan d'aimantation fixe, en tout point de la deuxième portion angulaire du corps aimanté, et
o présente une direction continûment variable dans le plan d'aimantation considéré en fonction de la position du point de la portion angulaire considérée du corps aimanté selon une direction perpendiculaire à l'axe de principal **(A')** dans le plan d'aimantation considéré.

**14.** - Système de capteur selon l'une des revendications **10 à 13, caractérisée en ce que** le système comporte une deuxième cellule de mesure **(12)** en un deuxième point de mesure **(C2)**, délivrant deux signaux électriques représentatifs respectivement d'une composante primaire ($By_2$) et d'une composante secondaire ($B_{z2}$) du champ magnétique créé par le corps aimanté **(10)** au point de mesure **(C2)** de la cellule **(10, 11)** considérée, dans le plan de mesure, et **en ce que** le système de capteur détermine une valeur représentative (θ) de la position angulaire relative entre les deux pièces en déterminant un angle brut (« gamma ») dont la tangente est fonction d'une composition différentielle des dites composantes mesurées par les deux cellules **(11, 12)** pour une position angulaire relative (θ) donnée.

**15.** - Système de capteur selon la revendication **14 caractérisé en ce que** la première et la deuxième cellule de mesure **(11, 12)** sont agencées de telle sorte que les axes de mesure primaires **(AP1)** de la première et de la deuxième cellule de mesure sont parallèles entre eux, et que les axes de mesure secondaires **(AP2)** de la première et de la deuxième cellule de mesure sont parallèles entre eux.

**16.** - Système de capteur selon l'une des revendications **10 à 15, caractérisé en ce que** le premier point de mesure **(C1)** de la première cellule de mesure et, le cas échéant, le deuxième point de mesure **(C2)** de la deuxième cellule sont agencés à une distance **(R)** de l'axe de rotation **(A)** qui est inférieure au rayon d'une surface cylindrique externe enveloppe du corps aimanté, en étant décalé(s) du corps aimanté selon la direction de l'axe de rotation **(A).**

**17.** - Système de capteur selon l'une des revendications **10 à 16, caractérisé en ce que** l'axe principal **(A')** coïncide avec l'axe de rotation **(A).**

**18.** - Système de capteur selon l'une des revendications **10 à 17, caractérisée en ce que** le plan de mesure **((AP1, AS1), (AP2, AS2))** de la ou des cellules de mesure sont parallèles à l'axe de rotation **(A).**

**19.** - Procédé de fabrication d'un corps aimanté pour un système de détermination d'une position angulaire relative d'une première pièce **(14)** par rapport à une seconde pièce **(16)** autour d'un axe de rotation **(A),** le procédé comprenant la fourniture d'un corps de matériau magnétisable ayant une forme de secteur angulaire courbé et ayant une étendue angulaire autour d'un axe principal **(A')**, ledit secteur angulaire comportant une portion angulaire unique ou plusieurs portions angulaires successives autour de l'axe principal **(A')** ;
**caractérisé en ce que** le procédé comporte, pour au moins une première portion angulaire du corps aimanté :

- la disposition, à proximité de la première portion angulaire du corps de matériau magnétisable, d'un premier réseau de conducteurs électriques parallèles comprenant plusieurs faisceaux de conducteurs électriques parallèles, ayant une orientation **(X1)** perpendiculaire à l'axe principal et parallèle à un premier rayon directeur issu de l'axe principal **(A')** et compris dans l'étendue angulaire de la première portion angulaire considérée du corps aimanté, les faisceaux étant décalés latéralement l'un de l'autre selon une direction de décalage perpendiculaire à leur orientation et perpendiculaire à l'axe principal **(A')** ;
- la circulation d'un courant électrique dans les faisceaux de conducteurs électriques, le sens de circulation du courant, défini dans un repère fixe par rapport au corps aimanté, étant identique dans tous les conducteurs d'un même faisceau, et étant inverse dans deux faisceaux adjacents, formant ainsi un ou plusieurs faisceaux aller dans lesquels le courant circule selon un premier sens, et un ou plusieurs faisceaux retour dans lesquels le courant circule selon un second sens, inverse du premier, le courant circulant dans les faisceaux étant apte à générer, autour du réseau et dans le corps de matériau magnétisable, un champ magnétique d'aimantation propre à aimanter le corps de matériau magnétisable.

**20.** - Procédé selon la revendication **19, caractérisé en ce que** le premier réseau de conducteurs électriques parallèles s'étend en regard de la première portion du corps de matériau magnétisable qui est une portion unique couvrant l'étendue angulaire du corps de matériau magnétisable.

**21.** - Procédé selon la revendication **19** ou **20, caractérisé en ce que** le premier rayon directeur est orienté selon une bissectrice de l'étendue angulaire du corps de matériau magnétisable.

**22.** - Procédé selon l'une des revendications **19** à **21, caractérisé en ce que** le premier réseau de conducteurs électriques parallèles s'étend en regard d'une première portion du corps de matériau magnétisable, **en ce qu'**un deuxième réseau de conducteurs électriques parallèles s'étend en regard d'une seconde portion du corps de matériau magnétisable, distincte de la première portion, les faisceaux de conducteurs électriques parallèles du second réseau étant orientés selon une deuxième orientation **(D2)** perpendiculaire à l'axe principal **(A')** et parallèle à un deuxième rayon directeur issu de l'axe principal **(A')** et compris dans l'étendue angulaire de la deuxième portion angulaire considérée .

**Patentansprüche**

**1.** Verfahren zum Bestimmen einer relativen Winkelposition eines ersten Teils (14) in Bezug auf ein zweites Teil (16) über einen Winkelhub um eine Drehachse (A), wobei:

- das erste Teil mit einem magnetisierten Körper (10) in der Form eines gekrümmten Winkelsektors um die Drehachse (A) ausgestattet ist, wobei der Winkelsektor einen einzelnen Winkelabschnitt oder mehrere aufeinanderfolgende Winkelabschnitte um die Drehachse (A) beinhaltet, wobei der magnetisierte Körper an einem beliebigen Punkt von mindestens einem Winkelabschnitt des magnetisierten Körpers eine Magnetisierung aufweist, deren Magnetisierungsvektor:

  ∘ parallel zu einer festen Magnetisierungsebene (PM) für den Winkelabschnitt des magnetisierten Körpers ist, und
  ∘ eine durchgehend variable Richtung in der Magnetisierungsebene in Abhängigkeit der Position des Punktes des magnetisierten Körpers entlang einer Richtung senkrecht zu der Drehachse (A) in der Magnetisierungsebene aufweist,

- das zweite Teil mit mindestens einer ersten Messzelle (11) an einem ersten Messpunkt (C1) ausgestattet ist, die zwei elektrische Signale liefert, die jeweils eine primäre Komponente $(By_1)$ und eine sekundäre Komponente $(Bz_1)$ des Magnetfeldes darstellen, das durch den magnetisierten Körper (10) an dem Messpunkt (C1) der berücksichtigten Zelle (10, 11) in einer Messebene erzeugt wird,

- das Verfahren einen Wert (θ) bestimmt, der die relative Winkelposition zwischen den zwei Teilen in Abhängigkeit der Komponenten darstellt, die durch die Messzelle (11) für eine gegebene relative Winkelposition (θ) gemessen werden,

**dadurch gekennzeichnet, dass** die Magnetisierungsebene (PM) des magnetisierten Körpers (10) parallel zu der Drehachse (A) ist.

2. Verfahren nach Anspruch 1, **dadurch gekennzeichnet, dass** der magnetisierte Körper (10) einen einzelnen Winkelabschnitt beinhaltet, wobei der magnetisierte Körper an einem beliebigen Punkt des magnetisierten Körpers eine Magnetisierung aufweist, deren Magnetisierungsvektor:

    ◦ parallel zu einer einzelnen festen Magnetisierungsebene für den magnetisierten Körper ist, und
    ◦ eine durchgehend variable Richtung in der Magnetisierungsebene in Abhängigkeit der Position des Punktes des magnetisierten Körpers entlang einer Richtung senkrecht zu der Drehachse (A) in der Magnetisierungsebene aufweist.

3. Verfahren nach Anspruch 2, **dadurch gekennzeichnet, dass** die Magnetisierungsebene (PM) senkrecht zu einem Radius ist, der von der Drehachse (A) abgeleitet und in der Winkelausdehnung des magnetisierten Körpers um die Hauptachse (A') umfasst ist, zum Beispiel entlang einer Winkelhalbierenden der Winkelausdehnung des magnetisierten Körpers oder des Winkelhubs ausgerichtet.

4. Verfahren nach Anspruch 1, **dadurch gekennzeichnet, dass** der magnetisierte Körper (10) mindestens einen ersten Winkelabschnitt und mindestens einen zweiten Winkelabschnitt, die voneinander verschieden sind, um die Drehachse (A) beinhaltet, wobei der magnetisierte Körper eine Magnetisierung aufweist, deren Magnetisierungsvektor:

    ◦ an einem beliebigen Punkt des ersten Winkelabschnittes des magnetisierten Körpers parallel zu einer ersten festen Magnetisierungsebene ist,
    ◦ an einem beliebigen Punkt des zweiten Winkelabschnittes des magnetisierten Körpers parallel zu einer zweiten festen Magnetisierungsebene ist, und
    ◦ eine durchgehend variable Richtung in der berücksichtigten Magnetisierungsebene in Abhängigkeit der Position des Punktes des berücksichtigten Winkelabschnittes des magnetisierten Körpers entlang einer Richtung senkrecht zu der Drehachse (A) in der berücksichtigten Magnetisierungsebene aufweist.

5. Verfahren nach einem der vorhergehenden Ansprüche, **dadurch gekennzeichnet, dass** das zweite Teil mit einer zweiten Messzelle (12) an einem zweiten Messpunkt (C2) ausgestattet ist, die zwei elektrische Signale liefert, die jeweils eine primäre Komponente ($By_2$) und eine sekundäre Komponente ($Bz_2$) des Magnetfeldes darstellen, das durch den magnetisierten Körper (10) an dem Messpunkt (C2) der berücksichtigten Zelle (10, 11) in der Messebene erzeugt wird, und dass das Verfahren einen Wert (θ) bestimmt, der die relative Winkelposition zwischen den zwei Teilen darstellt, indem ein Rohwinkel (Gamma) bestimmt wird, dessen Tangente abhängig von einer Differentialzusammensetzung der Komponenten ist, die durch die zwei Zellen (11, 12) für eine gegebene relative Winkelposition (θ) gemessen werden.

6. Verfahren nach Anspruch 5, **dadurch gekennzeichnet, dass** die erste und die zweite Messzelle (11, 12) an dem zweiten Teil angeordnet sind, sodass die primären Messachsen (AP1) der ersten und der zweiten Messzelle parallel zueinander sind, und dass die zweiten Messachsen (AS2) der ersten und der zweiten Messzelle parallel zueinander sind.

7. Verfahren nach einem der Ansprüche 5 oder 6, **dadurch gekennzeichnet, dass** das Verfahren einen Wert (θ) bestimmt, der die relative Winkelposition zwischen den zwei Teilen darstellt, indem ein Rohwinkel (Gamma) bestimmt wird, dessen Tangente abhängig von einem Verhältnis zwischen einerseits der Differenz der sekundären Komponenten ($\Delta B_z$) und andererseits der Differenz der primären Komponenten ($\Delta B_y$) ist, gemessen durch die zwei Zellen (11, 12) für eine gegebene relative Winkelposition (θ).

8. Verfahren nach einem der vorhergehenden Ansprüche, **dadurch gekennzeichnet, dass** der erste Messpunkt (C1) der ersten Messzelle und gegebenenfalls der zweite Messpunkt (C2) der zweiten Zelle in einem Abstand (R) von der Drehachse (A) angeordnet sind, der kleiner als der Radius einer äußeren zylindrischen Oberfläche des magnetisierten Körpers ist, während er/sie von dem magnetisierten Körper entlang der Richtung der Drehachse (A) versetzt ist/sind.

9. Verfahren nach einem der vorhergehenden Ansprüche, **dadurch gekennzeichnet, dass** die Messebene ((AP1, AS1), (AP2, AS2)) der Messzelle(n) parallel zu der Drehachse (A) ist/sind.

10. Sensorsystem zum Bestimmen einer relativen Winkelposition eines ersten Teils (14) in Bezug auf ein zweites Teil (16) über einen Winkelhub um eine Drehachse (A), wobei das System beinhaltet:

- einen magnetisierten Körper (10) in der Form eines gekrümmten Winkelsektors um eine Hauptachse (A') parallel zu der Drehachse (A), wobei der Winkelsektor einen einzelnen Winkelabschnitt oder mehrere aufeinanderfolgende Winkelabschnitte um die Hauptachse (A') beinhaltet und der magnetisierte Körper (10) eine Magnetisierung mit, an einem beliebigen Punkt von mindestens einem Winkelabschnitt des magnetisierten Körpers, einer Magnetisierung aufweist, deren Magnetisierungsvektor:

  ◦ parallel zu einer festen Magnetisierungsebene (PM) für den Winkelabschnitt des magnetisierten Körpers ist, und
  ◦ eine durchgehend variable Richtung in der Magnetisierungsebene in Abhängigkeit der Position des Punktes des magnetisierten Körpers entlang einer Richtung senkrecht zu der Drehachse in der Magnetisierungsebene aufweist,

- eine erste Messzelle (11) an einem ersten Messpunkt (C1), die zwei elektrische Signale liefert, die jeweils eine primäre Komponente ($By_1$) und eine sekundäre Komponente ($Bz_1$) des Magnetfeldes darstellen, das durch den magnetisierten Körper (10) an dem Messpunkt (C1) der berücksichtigten Zelle (10, 11) in einer Messebene erzeugt wird,
- eine zweite Messzelle (12) an einem zweiten Messpunkt (C2), die zwei elektrische Signale liefert, die jeweils eine primäre Komponente ($By_2$) und eine sekundäre Komponente ($Bz_2$) des Magnetfeldes darstellen, das durch den magnetisierten Körper (10) an dem Messpunkt (C2) der berücksichtigten Zelle (10, 11) in der Messebene erzeugt wird,

**dadurch gekennzeichnet, dass** die Magnetisierungsebene (PM) des magnetisierten Körpers (10) parallel zu der Drehachse (A) ist.

11. Sensorsystem nach Anspruch 10, **dadurch gekennzeichnet, dass** der magnetisierte Körper (10) einen einzelnen Winkelabschnitt beinhaltet, wobei der magnetisierte Körper an einem beliebigen Punkt des magnetisierten Körpers eine Magnetisierung aufweist, deren Magnetisierungsvektor:

  ◦ parallel zu einer einzelnen festen Magnetisierungsebene für den magnetisierten Körper ist, und
  ◦ eine durchgehend variable Richtung in der Magnetisierungsebene in Abhängigkeit der Position des Punktes des magnetisierten Körpers entlang einer Richtung senkrecht zu der Hauptachse (A') in der Magnetisierungsebene aufweist.

12. Sensorsystem nach Anspruch 11, **dadurch gekennzeichnet, dass** die Magnetisierungsebene senkrecht zu einem Radius ist, der von der Hauptachse (A') abgeleitet und in der Winkelausdehnung des magnetisierten Körpers um die Hauptachse (A') umfasst ist, zum Beispiel entlang einer Winkelhalbierenden der Winkelausdehnung des magnetisierten Körpers oder des Winkelhubs ausgerichtet.

13. Sensorsystem nach Anspruch 10, **dadurch gekennzeichnet, dass** der magnetisierte Körper (10) mindestens einen ersten Winkelabschnitt und mindestens einen zweiten Winkelabschnitt, die voneinander verschieden sind, um die Hauptachse (A') beinhaltet, wobei der magnetisierte Körper eine Magnetisierung aufweist, deren Magnetisierungsvektor:

  ◦ parallel zu einer ersten festen Magnetisierungsebene an einem beliebigen Punkt des ersten Winkelabschnittes des magnetisierten Körpers ist,
  ◦ parallel zu einer zweiten festen Magnetisierungsebene an einem beliebigen Punkt des zweiten Winkelabschnittes des magnetisierten Körpers ist, und
  ◦ eine durchgehend variable Richtung in der berücksichtigten Magnetisierungsebene in Abhängigkeit der Position des Punktes des berücksichtigten Winkelabschnittes des magnetisierten Körpers entlang einer Richtung senkrecht zu der Hauptachse (A') in der berücksichtigten Magnetisierungsebene aufweist.

**14.** Sensorsystem nach einem der Ansprüche 10 bis 13, **dadurch gekennzeichnet, dass** das System eine zweite Messzelle (12) an einem zweiten Messpunkt (C2) beinhaltet, die zwei elektrische Signale liefert, die jeweils eine primäre Komponente ($By_2$) und eine sekundäre Komponente ($Bz_2$) des Magnetfeldes darstellen, das durch den magnetisierten Körper (10) an dem Messpunkt (C2) der berücksichtigten Zelle (10, 11) in der Messebene erzeugt wird, und dass das Sensorsystem einen Wert ($\theta$) bestimmt, der die relative Winkelposition zwischen den zwei Teilen darstellt, indem ein Rohwinkel ("Gamma") bestimmt wird, dessen Tangente abhängig von einer Differentialzusammensetzung der Komponenten ist, die durch die zwei Zellen (11, 12) für eine gegebene relative Winkelposition ($\theta$) gemessen werden.

**15.** Sensorsystem nach Anspruch 14, **dadurch gekennzeichnet, dass** die erste und die zweite Messzelle (11, 12) angeordnet sind, sodass die primären Messachsen (AP1) der ersten und der zweiten Messzelle parallel zueinander sind, und dass die sekundären Messachsen (AP2) der ersten und der zweiten Messzelle parallel zueinander sind.

**16.** Sensorsystem nach einem der Ansprüche 10 bis 15, **dadurch gekennzeichnet, dass** der erste Messpunkt (C1) der ersten Messzelle und gegebenenfalls der zweite Messpunkt (C2) der zweiten Messzelle in einem Abstand (R) von der Drehachse (A) angeordnet sind, der kleiner als der Radius einer äußeren zylindrischen Mantelfläche des magnetisierten Körpers ist, während er/sie von dem magnetisierten Körper entlang der Richtung der Drehachse (A) versetzt ist/sind.

**17.** Sensorsystem nach einem der Ansprüche 10 bis 16, **dadurch gekennzeichnet, dass** die Hauptachse (A') mit der Drehachse (A) zusammenfällt.

**18.** Sensorsystem nach einem der Ansprüche 10 bis 17, **dadurch gekennzeichnet, dass** die Messebene ((AP1, AS1), (AP2, AS2)) der Messzelle(n) parallel zu der Drehachse (A) ist/sind.

**19.** Vorgang zur Herstellung eines magnetisierten Körpers für ein System zum Bestimmen einer relativen Winkelposition eines ersten Teils (14) in Bezug auf ein zweites Teil (16) um eine Drehachse (A), wobei der Vorgang Bereitstellen eines Körpers aus magnetisierbarem Material, der die Form eines gekrümmten Winkelsektors aufweist und eine Winkelausdehnung um eine Hauptachse (A') aufweist, umfasst, wobei der Winkelsektor einen einzelnen Winkelabschnitt oder mehrere aufeinanderfolgende Winkelabschnitte um die Hauptachse (A') beinhaltet,
**dadurch gekennzeichnet, dass** der Vorgang für mindestens einen ersten Winkelabschnitt des magnetisierten Körpers beinhaltet:

- Anordnen, in der Nähe des ersten Winkelabschnittes des Körpers aus magnetisierbarem Material, eines ersten Netzwerks aus parallelen elektrischen Leitern, umfassend mehrere Bündel aus parallelen elektrischen Leitern, eine Ausrichtung (X1) senkrecht zu der Hauptachse und parallel zu einem ersten Leitlinienradius abgeleitet von der Hauptachse (A') und in der Winkelausdehnung des ersten berücksichtigten Winkelabschnittes des magnetisierten Körpers umfasst aufweisend, wobei die Bündel seitlich voneinander entlang einer Versatzrichtung senkrecht zu ihrer Ausrichtung und senkrecht zu der Hauptachse (A') versetzt sind,
- Strömenlassen eines elektrischen Stroms in den Bündeln aus elektrischen Leitern, wobei die Strömungsrichtung des Stroms, die in einem festen Referenzrahmen in Bezug auf den magnetisierten Körper definiert ist, in allen Leitern eines gleichen Bündels identisch ist, und in zwei benachbarten Bündeln invers ist, wodurch ein oder mehrere ausgehende(s) Bündel, in dem/denen der Strom entlang einer ersten Richtung strömt, und ein oder mehrere rückkehrende(s) Bündel gebildet wird/werden, in denen der Strom entlang einer zweiten Richtung entgegengesetzt zu der ersten Richtung strömt, wobei der Strom, der in den Bündeln strömt, um das Netzwerk und in dem Körper aus magnetisierbarem Material ein Magnetisierungsmagnetfeld erzeugen kann, das geeignet ist, um den Körper aus magnetisierbarem Material zu magnetisieren.

**20.** Vorgang nach Anspruch 19, **dadurch gekennzeichnet, dass** sich das erste Netzwerk aus parallelen elektrischen Leitern dem ersten Abschnitt des Körpers aus magnetisierbarem Material zugewandt erstreckt, der ein einzelner Abschnitt ist, der die Winkelausdehnung des Körpers aus magnetisierbarem Material abdeckt.

**21.** Vorgang nach Anspruch 19 oder 20, **dadurch gekennzeichnet, dass** der erste Leitlinienradius entlang einer Winkelhalbierenden der Winkelausdehnung des Körpers aus magnetisierbarem Material ausgerichtet ist.

**22.** Vorgang nach einem der Ansprüche 19 bis 21, **dadurch gekennzeichnet, dass** sich das erste Netzwerk aus parallelen elektrischen Leitern einem ersten Abschnitt des Körpers aus magnetisierbarem Material zugewandt erstreckt, dass sich ein zweites Netzwerk aus parallelen elektrischen Leitern einem zweiten Abschnitt des Körpers aus magnetisierbarem Material, der von dem ersten Abschnitt verschieden ist, zugewandt erstreckt, die Bündel aus parallelen elektrischen Leitern des zweiten Netzwerks entlang einer zweiten Ausrichtung (D2) senkrecht zu der Hauptachse (A') ausgerichtet und parallel zu einem zweiten Leitlinienradius sind, der von der Hauptachse (A') abgeleitet und in der Winkelausdehnung des zweiten berücksichtigen Winkelabschnittes umfasst ist.

**Claims**

1.  - Method for determining a relative angular position of a first part (14) with respect to a second part (16) over an angular stroke about an axis of rotation (A), in which:

    - the first part is equipped with a magnetized body (10), in the shape of an angular curved sector about the axis of rotation (A), said angular sector including a single angular portion or several successive angular portions about the axis of rotation (A), the magnetized body having, at any point of at least one angular portion of the magnetized body, a magnetization whose magnetization vector:

        o is parallel to a fixed magnetization plane (PM) for said angular portion of the magnetized body, and
        o has a continuously variable direction in the magnetization plane as a function of the position of the point of the magnetized body along a direction perpendicular to the axis of rotation (A) in the magnetization plane;

    - the second part is equipped with at least a first measurement cell (11) at a first measurement point (C1), delivering two electrical signals representative respectively of a primary component ($By_1$) and a secondary component ($Bz_1$) of the magnetic field created by the magnetized body (10) at the measurement point (C1) of the considered cell (10, 11), in a measurement plane,
    - the method determines a value ($\theta$) representative of the relative angular position between the two parts as a function of said components measured by the measurement cell (11) for a given relative angular position ($\theta$);

    **characterized in that** the magnetization plane of the magnetized body (PM) is parallel to the axis of rotation (A).

2.  - The method according to claim 1, **characterized in that** the magnetized body (10) includes a single angular portion, the magnetized body having, at any point of the magnetized body, a magnetization whose magnetization vector:

        o is parallel to a single fixed magnetization plane for the magnetized body, and
        o has a continuously variable direction in the magnetization plane as a function of the position of the point of the magnetized body along a direction perpendicular to the axis of rotation (A) in the magnetization plane.

3.  - The method according to claim 2, **characterized in that** the magnetization plane (PM) is perpendicular to a radius derived from the axis of rotation (A) and comprised in the angular extent of the magnetized body about the main axis (A'), for example oriented along a bisector of the angular extent of the magnetized body or of the angular stroke.

4.  - The method according to claim 1, **characterized in that** the magnetized body (10) includes at least a first angular portion and at least a second angular portion distinct from each other about the axis of rotation (A), the magnetized body having a magnetization whose magnetization vector:

        o at any point of the first angular portion of the magnetized body, is parallel to a first fixed magnetization plane,
        o at any point of the second angular portion of the magnetized body, is parallel to a second fixed magnetization plane, and
        o has a continuously variable direction in the considered magnetization plane as a function of the position of the point of the considered angular portion of the magnetized body along a direction perpendicular to the axis of rotation (A) in the considered magnetization plane.

5.  - The method according to oneof the preceding claims, **characterized in that** the second part is equipped with a second measurement cell (12) at a second measurement point (C2), delivering two electrical signals representative respectively of a primary component ($By_2$) and a secondary component ($Bz_2$) of the magnetic field created by the magnetized body (10) at the measurement point (C2) of the considered cell (10, 11), in the measurement plane, and **in that** the method determines a value ($\theta$) representative of the relative angular position between the two parts by determining a raw angle (gamma) whose tangent is a function of a differential composition of said components measured by the two cells (11, 12) for a given relative angular position ($\theta$).

**6.** - The method according to claim 5, **characterized in that** the first and second measurement cells (11, 12) are arranged on the second part such that the primary measurement axes (AP1) of the first and second measurement cells are parallel to each other, and that the secondary measurement axes (AS2) of the first and second measurement cells are parallel to each other.

**7.** - The method according to any of claims 5 or 6, **characterized in that** the method determines a value ($\theta$) representative of the relative angular position between the two parts by determining a raw angle (gamma) whose tangent is a function of a ratio between on the one hand the difference of the secondary components ($\Delta B_z$) and on the other hand the difference of the primary components ($\Delta B_y$), measured by the two cells (11, 12) for a given relative angular position ($\theta$).

**8.** - The method according to one of the preceding claims, **characterized in that** the first measurement point (C1) of the first measurement cell and, where appropriate, the second measurement point (C2) of the second cell are arranged at a distance (R) from the axis of rotation (A) which is smaller than the radius of an outer cylindrical surface of the magnetized body, while being offset from the magnetized body along the direction of the axis of rotation (A).

**9.** - The method according to any of the preceding claims, **characterized in that** the measurement plane ((AP1, AS1), (AP2, AS2)) of the measurement cell(s) is/are parallel to the axis of rotation (A).

**10.** - A sensor system for determining a relative angular position of a first part (14) with respect to a second part (16) over an angular stroke about an axis of rotation (A), the system including:

- a magnetized body (10) in the shape of an angular curved sector about a main axis (A') parallel to the axis of rotation (A), said angular sector including a single angular portion or several successive angular portions about the main axis (A'), and the magnetized body (10) having a magnetization with, at any point of at least one angular portion of the magnetized body, a magnetization whose magnetization vector:

o is parallel to a fixed magnetization plane (PM) for said angular portion of the magnetized body, and
o has a continuously variable direction in the magnetization plane as a function of the position of the point of the magnetized body along a direction perpendicular to the axis of rotation in the magnetization plane;

- a first measurement cell (11) at a first measurement point (C1), delivering two electrical signals representative respectively of a primary component ($By_1$) and a secondary component ($Bz_1$) of the magnetic field created by the magnetized body (10) at the measurement point (C1) of the considered cell (10, 11), in a measurement plane,
- a second measurement cell (12) at a second measurement point (C2), delivering two electrical signals representative respectively of a primary component ($By_2$) and a secondary component ($Bz_2$) of the magnetic field created by the magnetized body (10) at the measurement point (C2) of the considered cell (10, 11), in the measurement plane;

**characterized in that** the magnetization plane (PM) of the magnetized body is parallel to the axis of rotation (A).

**11.** - The sensor system according to claim 10, **characterized in that** the magnetized body (10) includes a single angular portion, the magnetized body having, at any point of the magnetized body, a magnetization whose magnetization vector:

o is parallel to a single fixed magnetization plane for the magnetized body, and
o has a continuously variable direction in the magnetization plane as a function of the position of the point of the magnetized body along a direction perpendicular to the main axis (A') in the magnetization plane.

**12.** - The sensor system according to claim 11, **characterized in that** the magnetization plane is perpendicular to a radius derived from the main axis (A') and comprised in the angular extent of the magnetized body about the main axis (A'), for example oriented along a bisector of the angular extent of the magnetized body or of the angular stroke.

**13.** - The sensor system according to claim 10, **characterized in that** the magnetized body (10) includes at least a first angular portion and at least a second angular portion distinct from each other about the main axis (A'), the magnetized body having a magnetization whose magnetization vector:

o is parallel to a first fixed magnetization plane, at any point of the first angular portion of the magnetized body,

o is parallel to a second fixed magnetization plane, at any point of the second angular portion of the magnetized body, and

o has a continuously variable direction in the considered magnetization plane as a function of the position of the point of the considered angular portion of the magnetized body along a direction perpendicular to the main axis (A') in the considered magnetization plane.

**14.** - The sensor system according to one of the claims 10 to 13, **characterized in that** the system includes a second measurement cell (12) at a second measurement point (C2), delivering two electrical signals representative respectively of a primary component ($By_2$) and a secondary component ($Bz_2$) of the magnetic field created by the magnetized body (10) at the measurement point (C2) of the considered cell (10, 11), in the measurement plane, and **in that** the sensor system determines a value ($\theta$) representative of the relative angular position between the two parts by determining a raw angle ("gamma") whose tangent is a function of a differential composition of said components measured by the two cells (11, 12) for a given relative angular position ($\theta$).

**15.** - The sensor system according to claim 14, **characterized in that** the first and second measurement cells (11, 12) are arranged such that the primary measurement axes (AP1) of the first and second measurement cells are parallel to each other, and that the secondary measurement axes (AP2) of the first and second measurement cells are parallel to each other.

**16.** - The sensor system according to one of the claims 10 to 15, **characterized in that** the first measurement point (C1) of the first measurement cell and, where appropriate, the second measurement point (C2) of the second cell are arranged at a distance (R) from the axis of rotation (A) which is smaller than the radius of an outer cylindrical envelope surface the magnetized body, while being offset from the magnetized body along the direction of the axis of rotation (A).

**17.** - The sensor system according to one of the claims 10 to 16 **characterized in that** the main axis (A') coincides with the axis of rotation (A).

**18.** - The sensor system according to one of the claims 10 to 17, **characterized in that** the measurement plane ((AP1, AS1), (AP2, AS2)) of the measurement cell(s) is parallel to the axis of rotation (A).

**19.** - A method for manufacturing a magnetized body for a system for determining a relative angular position of a first part (14) with respect to a second part (16) about an axis of rotation (A), the method comprising providing a body of magnetizable material having the shape of an angular curved sector and having an angular extent about a main axis (A'), said angular sector including a single angular portion or several successive angular portions about the main axis (A');

**characterized in that** the method includes, for at least a first angular portion of the magnetized body:

- the disposition, in the vicinity of the first angular portion of the body of magnetizable material, of a first network of parallel electrical conductors comprising several bundles of parallel electrical conductors, having an orientation (X1) perpendicular to the main axis and parallel to a first directrix radius derived from the main axis (A') and comprised in the angular extent of the first considered angular portion of the magnetized body, the bundles being offset laterally from each other along an offset direction perpendicular to their orientation and perpendicular to the main axis (A');

- the flow of an electric current in the bundles of electrical conductors, the direction of flow of the current, defined in a fixed reference frame with respect to the magnetized body, being identical in all the conductors of the same bundle, and being reversed in two adjacent bundles, thus forming one or several outgoing bundle(s) in which the current flows along a first direction, and one or several incoming bundle(s) in which the current flows along a second direction, opposite to the first direction, the current flowing in the bundles being able to generate, around the network and in the body of magnetizable material, a magnetization magnetic field suitable for magnetizing the body of magnetizable material.

**20.** - The manufacturing method according to claim 19, **characterized in that** the first network of parallel electrical conductors extends facing the first portion of the body of magnetizable material which is a single portion covering the angular extent of the body of magnetizable material.

**21.** - The manufacturing method according to claim 19 or 20, **characterized in that** the first directrix radius is oriented along a bisector of the angular extent of the body of magnetizable material.

**22.** - The manufacturing method according to one of the claims 19 to 21, **characterized in that** the first network of parallel electrical conductors extends facing a first portion of the body of magnetizable material, **in that** a second network of parallel electrical conductors extends facing a second portion of the body of magnetizable material, distinct from the first portion, the bundles of parallel electrical conductors of the second network being oriented along a second orientation (D2) perpendicular to the main axis (A') and parallel to a second directrix radius derived from the main axis (A') and comprised in the angular extent of the second considered angular portion.

FIG.1A

FIG.1B

FIG.2A

FIG.2B

FIG.3

FIG.4

FIG.5

FIG.5A

FIG.6

34

FIG.7

FIG.8

FIG.9

FIG.10

FIG.11

FIG.14

FIG.12A

FIG.12B

FIG.13A

FIG.13B

**EP 3 867 603 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2212652 A
- WO 2007099238 A
- DE 102012111653
- US 6545463 B
- EP 0997706 A
- US 8022694 B
- EP 2488830 A
- US 2002089327 A
- US 2007090827 A
- US 2015177023 A